# EUROPEAN PATENT SPECIFICATION

(11) **EP 2 565 770 B1**
(45) Date of publication and mention of the grant of the patent: **02.10.2019**
(21) Application number: 12182255.5
(22) Date of filing: 29.08.2012
(51) Int. Cl.: G06F 3/0488, G06F 3/044, G06F 3/046, G06F 3/0354

(54) **A portable apparatus and an input method of a portable apparatus**
Tragbare Vorrichtung und Eingabeverfahren einer tragbaren Vorrichtung
Appareil portable et procédé de saisie d'un appareil portable

(30) Priority: 31.08.2011 KR 20110087527
(43) Date of publication of application: 06.03.2013
(73) Proprietor: Samsung Electronics Co., Ltd., Suwon-si, Gyeonggi-do, 443-742 (KR)
(72) Inventor: Park, Hyunmi, 443-742 Gyeonggi-do (KR); Koh, Sanghyuk, 443-742 Gyeonggi-do (KR); Kim, Taeyeon, 443-742 Gyeonggi-do (KR); Kim, Hyunkyoung, 443-742 Gyeonggi-do (KR); Park, Hyebin, 443-742 Gyeonggi-do (KR); Oh, Saegee, 443-742 Gyeonggi-do (KR); Jeon, Jinyoung, 443-742 Gyeonggi-do (KR)
(74) Representative: HGF Limited

(56) References cited:
- US-A1- 2003 044 069
- US-A1- 2004 008 189
- US-B1- 6 417 845
- US-B1- 7 646 379

## Description

### Field of the Invention

The present invention relates to a portable apparatus and an input method of a portable apparatus. In particular, the portable apparatus comprises a portable terminal and a pen. More particularly, although not exclusively, the present invention relates to a pen input device and a method of a combination of a portable terminal and a pen, the portable terminal having a touch panel.

### Description of the Related Art

A portable terminal may often include a touch device, and the touch device may sense touched points within a touch panel and to control the operation of the portable terminal. Such a touch device often uses an electrostatic capacitive sensing method in which the touch panel comprises an array of electrostatic capacitive sensors. Such a portable terminal provides for finger touch interaction. However, a finger touch method is not appropriate for performing precise work due to the large size of the touch contact area of a finger on a touch panel.

Therefore, there is an increasing need for another input method in addition to or instead of using fingers in a portable terminal including a touch device. In particular, in case a precise and detailed input is needed, such as when taking a memo or drawing a picture, using a pen in accordance with embodiments of the present invention may be advantageous.

US-2004/008189-A1 discloses a stylus which includes one or more stylus tips to initiate different mouse actions. The different mouse actions may be initiated by causing the stylus tip to generate disturbance signals on a touch sensitive device. The different mouse actions may also be initiated by using stylus tips of different characteristics with each characteristic associated with a mouse action.

### Summary of the Invention

Embodiments of the present invention aim to address at least some of the above problems, and provide a portable apparatus comprising a portable terminal and a pen and an input method of a portable terminal including a touch panel. In an exemplary embodiment of the present invention, the experience of actually using a pen is applied in a touch mobile device, thereby providing a new experience allowing different input options such as pen gesture and pen handwriting, etc. which are not possible with only a finger touch.

To this end according to certain embodiments of the invention, the pen and the touch panel are arranged such that when the pen is set to a first input state an operation of an application can be performed using the a pen, and when set to a second input state an application can be called or a certain command can be performed. The portable terminal can be arranged to perform a function or command which is respectively set according to the first pen input state and the second pen input state.

Embodiments of the present invention provide an input device in the form of a portable apparatus comprising a portable terminal and a pen, and an input method of such a portable apparatus capable of controlling operations of an application executed according to user input with the pen. Such user input may relate to inputting letters by handwriting and drawing an image in various applications. Further, embodiments of the present invention provide a device and method for generating various inputs to a portable terminal capable of calling a certain application of a portable terminal independently of the operational control of an application executed in the portable terminal and generating a certain command by adding a button to a pen.

In accordance with a first aspect of the present invention there is provided a portable apparatus comprising a portable terminal and a pen, the portable terminal comprising a controller, a touch panel, and a display unit: wherein the pen includes a button and the pen is arranged to be set to a first input state in which the pen generates a first level of electricity or to a second input state in which the pen generates a second level of electricity depending on whether or not the button has been pressed; wherein the touch panel includes a touch sensor arranged to change electricity in response to being touched by the pen or the pen approaching the touch panel and according to the level of electricity generated by the pen, the touch panel being arranged to generate a first input signal or a second input signal depending upon the change in electricity; wherein the controller is arranged to analyse the first or second input signal, to determine a first input or second input depending upon the first or second input signal, to perform a pre-set function corresponding to the first input in an executed application, and to call a pre-set application or perform a pre-set command corresponding to the second input; wherein the display unit is arranged to display a screen processed according to at least one of the first input and the second input under the control of the controller; wherein the first input includes at least one of a general input that controls operation of the executed application, a handwritten letter and a drawing, and the second input is a command that calls a predetermined application and/or a command for execution of a predetermined operation; wherein in response to determining a general input, the controller is arranged to perform different functions according to an input type of the general input; and wherein in response to determining a second input, the controller is arranged to perform different commands according to an input type of the second input.

In accordance with a second aspect of the present invention there is provided an input method of a portable apparatus comprising a portable terminal and a pen, the portable terminal comprising a touch panel, the input method comprising: generating by the pen a first level electricity in a first input state and a second level of electricity in a second input state depending on whether or not a button of the pen has been pressed; generating by the touch panel a first input signal or a second input signal according to a sensed change in capacitance of a touch sensor in response to the touch panel being touched by the pen or the pen approaching the touch panel and according to the level of electricity generated at the pen; analysing the first or second input signal to determine a first input or a second input depending upon the first or second input signal; performing a pre-set function corresponding to the first input in an application being executed; calling a pre-set application or performing a pre-set command corresponding to the second input; and displaying, on a display unit, a screen processed according to at least one of the first input and the second input; wherein the first input includes at least one of a general input that controls operation of the executed application, a handwritten letter and a drawing, and the second input is a command that calls a predetermined application and/or a command for execution of a predetermined operation; wherein in response to determining a general input, the method further comprises performing different functions according to an input type of the general input; and wherein in response to determining a second input, the method further comprises performing different commands according to an input type of the second input.

According to embodiments of the present invention, by performing a touch function of a touch device using a pen in a portable terminal, a specialized experience can be provided, and precise operational control is possible. Further, because letters can be inputted by handwriting, user convenience can be improved, and because drawing images can be included in various applications, various effects of a portable terminal can be implemented. In addition, by adding a button in a pen, various inputs of a portable terminal are capable of calling a certain application and generating a certain command of the portable terminal independently of operational control of an application executed in the portable terminal. Therefore, by performing an input function using a pen in a portable terminal, a pen-specialized handwriting experience is extended to general mobile use, through which a specialized experience using a pen can be provided, which has not been possible before.

Another aspect of the invention provides a computer program comprising instructions arranged, when executed, to implement a method and/or apparatus in accordance with any one of the above-described aspects. A further aspect provides machine-readable storage storing such a program.

### Brief Description of the Drawings

The objects, features and advantages of the present invention will be more apparent from the following detailed description in conjunction with the accompanying drawings, in which:
FIG. 1 illustrates an implementation of a portable terminal according to an exemplary embodiment of the present invention;
FIG. 2 illustrates a pen setting procedure according to the exemplary embodiment of the present invention;
FIGS. 3A and 3B illustrate screens displayed in a display unit in the process of performing a pen setting procedure as in FIG. 2;
FIG. 4 is a flowchart illustrating a procedure for controlling an operation of an application executed in a portable terminal using a pen according to the exemplary embodiment of the present invention;
FIG. 5A illustrates an example of a form for a general input of a first input according to the exemplary embodiment of the present invention, and FIG. 5B illustrates an example of a form of a second input according to the exemplary embodiment of the present invention;
FIG. 6 is a flowchart illustrating a procedure for processing a first input performed in FIG. 4;
FIG. 7 illustrates a procedure for processing a general input of a first input processed in FIG. 6;
FIG. 8 illustrates a procedure for writing a document using a pen according to the exemplary embodiment of the present invention;
FIG. 9A illustrates a handwriting pad as a handwriting input method editor (IME) displayed in a letter writing application, and FIG. 9B illustrates a method for correcting handwritten letters and documents in a document writing application;
FIG. 10 illustrates a procedure for processing a drawing input in the exemplary embodiment of the present invention;
FIGS. 11A to 11G illustrate an example of performing a drawing mode as in FIG. 10;
FIG. 12 is a flowchart illustrating a procedure for processing a second input according to the exemplary embodiment of the present invention;
FIGS. 13A and 13B illustrate an example processed while performing a procedure as in FIG. 12;
FIGS. 14A to 14C illustrate a rich memo list of a portable terminal and a procedure for controlling the list according to the exemplary embodiment of the present invention;
FIG. 15A illustrates an example of a rich memo according to the exemplary embodiment of the present invention, and FIG. 15B illustrates an example of a drawing pad used in a rich memo;
FIG. 16 illustrates a quick memo list included in a rich memo according to the exemplary embodiment of the present invention;
FIG. 17 illustrates an exemplary embodiment of a pad for generating a quick memo in a quick memo list of FIG. 16; and
FIG. 18 illustrates a method for selecting a quick memo application according to the exemplary embodiment of the present invention.

### Detailed Description of the Invention

Preferred embodiments of the present invention are described with reference to the accompanying drawings in detail. The same reference numbers are used throughout the drawings to refer to the same or like parts. Detailed descriptions of well-known functions and structures incorporated herein may be omitted to avoid obscuring the subject matter of the present invention. Also, terms described herein, which are defined considering the functions of the present invention, may be implemented differently depending on user and operator's intention and practice. Therefore, the terms should be understood on the basis of the disclosure throughout the specification.

Furthermore, although the drawings represent exemplary embodiments of the invention, the drawings are not necessarily to scale and certain features may be exaggerated or omitted in order to more clearly illustrate and explain the present invention.

Among the terms set forth herein, a terminal or portable terminal refers to any kind of device capable of processing data which is transmitted to or received from any external entity. The terminal may display icons or menus on a screen to which stored data and various executable functions are assigned or mapped. The terminal may include a computer, a notebook, a tablet PC, a mobile device, and the like.

Among the terms set forth herein, a pen refers to a pointer device for interacting with a touch screen, touch panel or other form of touch input within a portable terminal. Preferably such a pen provides for finer control of the touch panel than is possible with a finger, by ensuring that the pen has a smaller tip for touching the touch panel than a fingertip. As will be explained below, certain embodiments of the invention include a pen having a button arranged to set the pen into either a first input state or a second input state. The input states may relate to first and second levels of electricity within the pen, which may be provided proximal to the pen tip. In certain embodiments the portable terminal touch panel may include an array of sensors arranged firstly to detect the presence of a pen touching the touch panel and secondly to distinguish between the electricity levels of the first and second input states in order to generate first and second input signals to be supplied to a portable terminal controller.

Among the terms set forth herein, a portable apparatus refers to a combination of a portable terminal including a touch panel and a pen as described above. Alternatively, the pen may be viewed as part of the portable terminal itself, in which case reference may be made solely to a terminal or portable terminal including a pen and a touch panel.

Among the terms set forth herein, a screen refers to a display or other output device which visually displays information to the user, and which optionally is capable of receiving and electronically processing tactile inputs from a user using a pen, a stylus, a finger of the user, or other techniques for conveying a user selection from the user to the output devices.

Among the terms set forth herein, an icon refers to a graphical element such as a figure or a symbol displayed on the screen of the device such that a user can easily select a desired function or data. In particular, each icon has a mapping relation with any function being executable in the device or with any data stored in the device and is used for processing functions or selecting data in the device. When a user selects one of the displayed icons, the device identifies a particular function or data associated with the selected icon. Then the device executes the identified function or displays the identified data.

Among terms set forth herein, data refers to any kind of information processed by the device, including text and/or images received from any external entities, messages transmitted or received, and information created when a specific function is executed by the device.

Among the terms set forth herein, first and second input states refer to an input state selected at the pen according to whether the pen button is pressed (second input state) or not pressed (first input state). A touch input refers to physical contact being made between the pen and the touch panel (pen touch) or between a hand or finger and the touch panel (hand touch or finger touch). Alternatively, a touch input may refer to the pen, hand, finger etc. approaching the touch panel without physical contact being made. First and second input signals refer to signals generated by the touch panel and supplied to a portable terminal controller in response to a pen touch according to whether the first or second input state is selected through the pen button. First and second input refers to a final user input determined by the processor in response to first and second input signals supplied by the touch panel and taking into account properties of the first and second input signals relating to movement of the pen relative to the touch panel.

The present invention discloses a device and method for performing a certain function or command according to a pen touch in a portable apparatus comprising a pen and a portable terminal having a touch device (for instance, a touch screen which may also be described as a touch display or a touch panel). Here, the portable terminal can include a mobile phone, a multimedia device like an MP3 player, and a tablet PC, etc. As noted above, in certain embodiments of the invention there may be provided a portable terminal which includes a pen. The pen may be a separable or detachable component of the portable terminal. However, in the present specification reference will be made to a portable apparatus comprising a portable terminal and a pen. Further, in an exemplary embodiment of the present invention, a pen can generate different kinds of input signals by having a button or a means and/or any other known devices, components, and methods having a function similar to that of a button. In the explanation below, a first input is determined by a portable terminal controller in response to a first input signal generated by a touch panel when a pen is in a first input state, and a second input is determined by the portable terminal controller in response to a second input signal generated by the touch panel when the pen is in a second input state where a button is pushed. It will be understood that the pen button may be pressed and released to transition between the first and second input states or the second input state may relate to the pen button being pressed and held pressed. Further, in the explanation below, a document writing mode refers to a mode for converting a user's handwritten letter inputs into letter data, and a drawing mode refers to a mode for converting a user's handwritten drawing inputs into an image. At this time, letters handwritten in the drawing mode can be converted into letter data when a recognition command is generated.

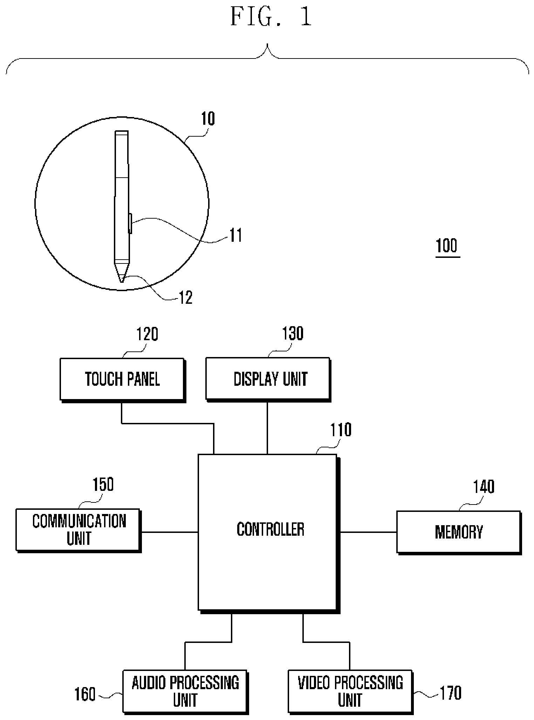

FIG. 1 illustrates an implementation of a portable apparatus comprising a portable terminal 100 and a pen 10 according to the exemplary embodiment of the present invention.

Referring to FIG. 1, the portable apparatus includes a pen 10 according to the exemplary embodiment of the present invention which comprises a button 11, a head 12, and a body made of, for example, aluminium, etc. Here, the head 12 is made of insulating material (e.g., silicone rubber or any known non-conductive material), and can contain a component known in the art that can generate an electrical field of different magnitudes depending on whether the button 11 has been pushed. Specifically, the pen 10 has a first input state in which the button 11 is not pressed in which at least part of the pen has a first level of electricity and a second input state in which the button 11 is pressed in which at least part of the pen has a second level of electricity. By "level of electricity" it is meant that the component within the pen 10 carries different levels of electrical charge according to whether the button 11 is pressed. Consequently, at least part of the pen 10 can be charged to a different electrical potential in the first and second input states. This difference in electrical potential can be detected by a sensor within a touch panel 120 of the portable terminal, and used to generate a first or second input signal accordingly. As will be described below, the first and second input signals are characterised by further properties relating to movement of the pen 10 relative to the touch panel 120.

The portable terminal 100 includes a touch panel 120 which can be a touch device of a capacitive-sensor type and electromagnetic type known in the art, and can be implemented integrally with a display unit 130. In addition, the touch panel 120 can be comprised of an electromagnetic touch device and a capacitive touch device. In such case, the electromagnetic touch panel is to be operated as a touch panel for the pen and thus a current is applied on the touch panel causing resonance and thereby current induced by a touch (i.e. a contact) from the pen, can be measured. Then, the control unit 110 determines whether a touch has been detected and location of the touch, in case the touch is detected, according to a touch signal of the pen from the touch panel 120. Moreover, the control unit 110 can detect a contact (i.e. a touch) from a finger of the user via the capacitive touch panel. Thus, the control unit 110 detects the touch input from the finger and the pen via independently operating touch panels. As a result, the control unit 110 can simultaneously receive the two touch inputs. In the following descriptions, the touch panel 120 can either be the capacitive touch panel or the electromagnetic touch panel.

The touch panel 120 according to the exemplary embodiment of the present invention should be able to distinguish and sense touch inputs of the pen 10 and a user's finger, etc. The touch panel 120 is able to distinguish between a pen touch when the pen is in the first input state and a pen touch when the pen is in the second input state, and generate first and second input signals accordingly, by sensing the electrical potential of the component within the pen through its interaction with the sensors within the touch panel. In certain embodiments the touch panel may be able to distinguish between a pen touch and a finger touch through changes at the sensors. The display unit 130 displays operation screens of applications executed in the portable terminal 100.

A memory 140 stores an operation program of the portable terminal 100 and programs according to the exemplary embodiment of the present invention for implementing the present invention as described herein, and stores functions or commands that should be operated according to the input state of the pen 10 in the exemplary embodiment of the present invention. A controller 110 controls general operation of the portable terminal 100 and analyses different types of input signals received from the touch panel 120 according to the exemplary embodiment of the present invention and processes a corresponding function or command. Further, the controller 110 includes a letter recognition processing unit, recognizes handwritten letters written in the document writing mode, and recognizes handwritten letters when a handwritten letter recognition command is generated in the screen of the display unit 130 and/or touch panel 120. Further, the controller 110 includes an image processing unit, and generates a new image by combining a drawn or handwritten image with a screen image being displayed. Further, the controller 110 includes a crop processing unit, and if the user draws a closed curved line and generates a crop command, the image in the closed curved line is cropped and processed.

The communication unit 150 performs a communication function of the portable terminal 100. Here, the communication unit 150 can be a CDMA, WCDMA or LTE type communication unit which wirelessly communicates with a public switched telephone network (PSTN), can be a communication unit of WiFi, WiMax WiBro type connected to a wireless Internet network, and/or can be a Bluetooth compatible device which can perform wireless communications with a short range device, and a communication unit of a near field communication (NFC) or RFID type. The communication unit 150 can include at least one of the above example communication units, and can also include any other known types of communication units. The audio processing unit 160 processes audio signals of the portable terminal 100, and processes video signals of the portable terminal 100. Alternatively, a video processing unit 170 may be included and connected to the portable terminal 100 for processing any video signals.

The pen 10 includes a body which may be composed, for example, of aluminium, which allows an electric current flowing in a human's body to reach the surface of a device, a head 12 made of any known insulating material, such as silicone or silicone rubber, which spreads; that is, capable of being deformed, so that electricity can be detected in an area larger than a certain predetermined minimum area. Further, the pen 10 includes a button 11, and can have a configuration which can generate electricity of different magnitudes depending on whether the button 11 has been pushed. That is, in the state where a person is in contact with the pen; for example, the state where a person is holding the pen 10, the pen 10 can generate electricity, and at this time, the pen 10 can be implemented with known components to generate electricity of a first magnitude in the state where the button 11 has not been pushed, and the pen 11 can be implemented with known components to generate electricity of a second magnitude in the state where the button 11 has been pushed.

In the portable terminal 100 having the above configurations and implementations, the touch panel 120 includes a touch sensor, and if electricity is sensed in an area larger than a certain predetermined minimum area, the touch sensor recognizes the contact with the touch panel 120 as a touch. For example, the "GALAXY S series", "GALAXY note" and "GALAXY NEXUS" devices, which are electronic devices with touch screens, commercially available from "SAMSUNG", recognize a touch when the sensed area is larger than 2.5mm (length) X 2.5mm (breadth), the "IPHONE", an electronic device commercially available from "APPLE CORPORATION", recognizes a touch when the sensed area is larger than 3mm X 3mm, and the "VEGA X", an electronic device commercially available from "PANTECH", recognizes a touch when the sensed area is larger than 5mm X 5mm. Further, in the case of the touch panel 120, the pen's head-contacting area is different from the finger-contacting area. That is, the contacting area of the pen 10 is relatively smaller than a typical finger-contacting area of most users of the portable terminal 100, and thus the controller 110 can sense and distinguish the input signal received from the touch panel 120 as a pen touch input or a finger touch input depending on the size of the contact area. Further, the pen 10 can generate electricity of different magnitudes depending on whether the button 11 has been pushed. Hence, changes of electricity sensed through the touch panel 120 can be different, and the controller 110 can sense a pen input depending on whether the button 11 has been pushed according to the changes of electricity.

Further, when constituting the touch panel 120, a touch sensor for sensing a finger touch and a touch sensor for sensing a touch of a pen 10 can be independently implemented. The contact area and/or magnitude of the electricity according to a touch by a finger and a pen can be different, and thus the controller 110 can sense a change of electricity generated from each touch sensor, and sense and distinguish a touch of the finger or the pen 10.

In the explanation below, a signal generated by the touch panel 120 in the state where the button 11 of a pen 10 has not been pushed (button off state) is called a first input signal, and a signal generated in the state where the button 11 has been pushed (button on state) is called a second input signal. In the exemplary embodiment of the present invention, the first input signal can be processed by the controller based upon properties of how the pen 10 moves relative to the touch panel 120 into a general first input such as a tap, a long press and a flick, handwriting, drawing and a crop, and there can be an input which performs a function that is set for the corresponding application. Further, the second input signal can be processed by the controller to determine a second input of a command which performs a certain function in the portable terminal 100, and can be generated by a hand gesture in the state where the button 11 of the pen 10 has been pushed. That is, the second input can be a long press in the state where the button 11 of the pen 10 has been pushed, a double tap (click), a flick (horizontal, vertical), and a certain form of a gesture (e.g., a movement which approximates the shape of a circle and a quadrangle, etc.). The second input may overlap a general input of the first input. The memory 140 can include a mapping table for functions and commands according to the first input and the second input, and the controller 110 can perform a function or command according to the first or second input in an application currently in operation with reference to the memory 140 when generating the first or second inputs.

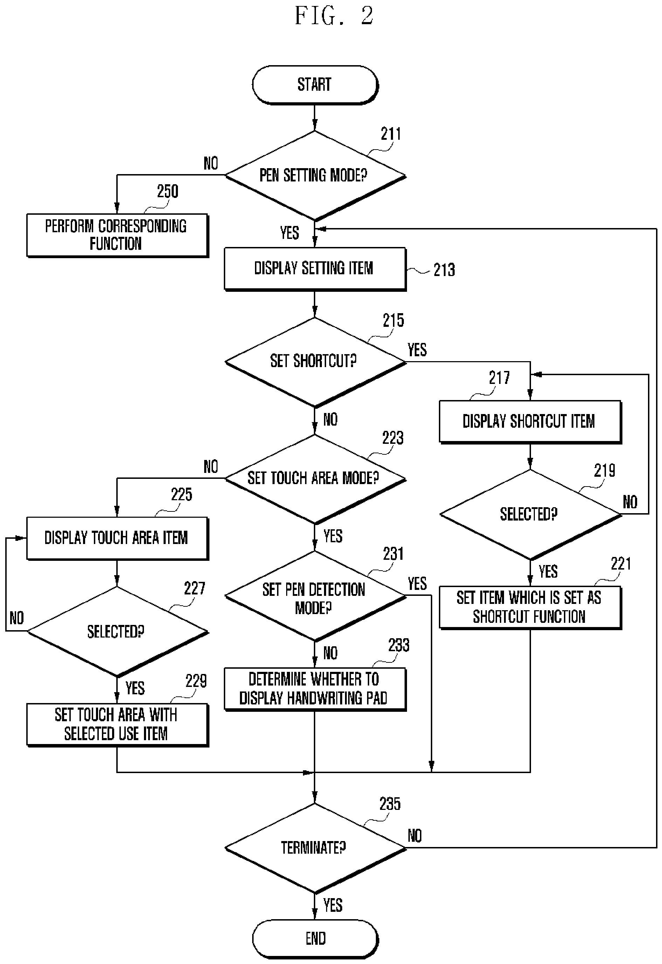

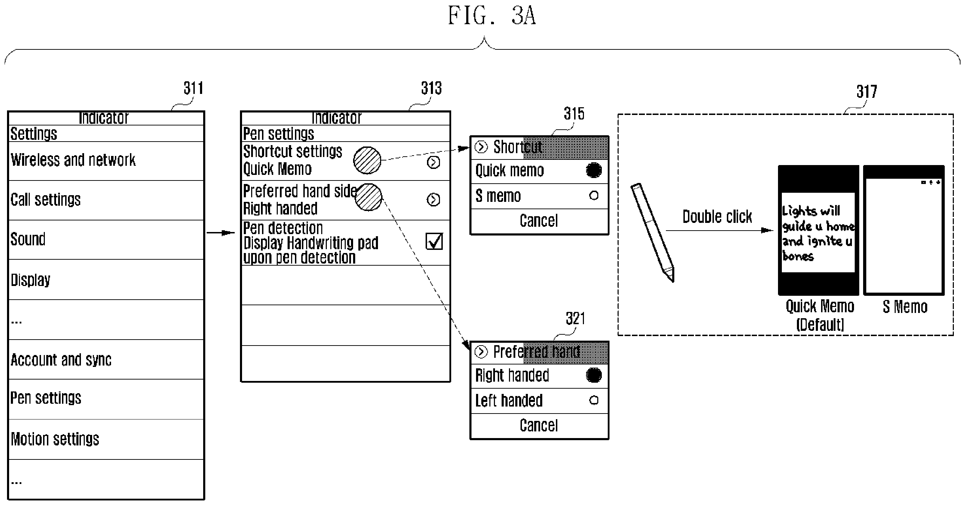

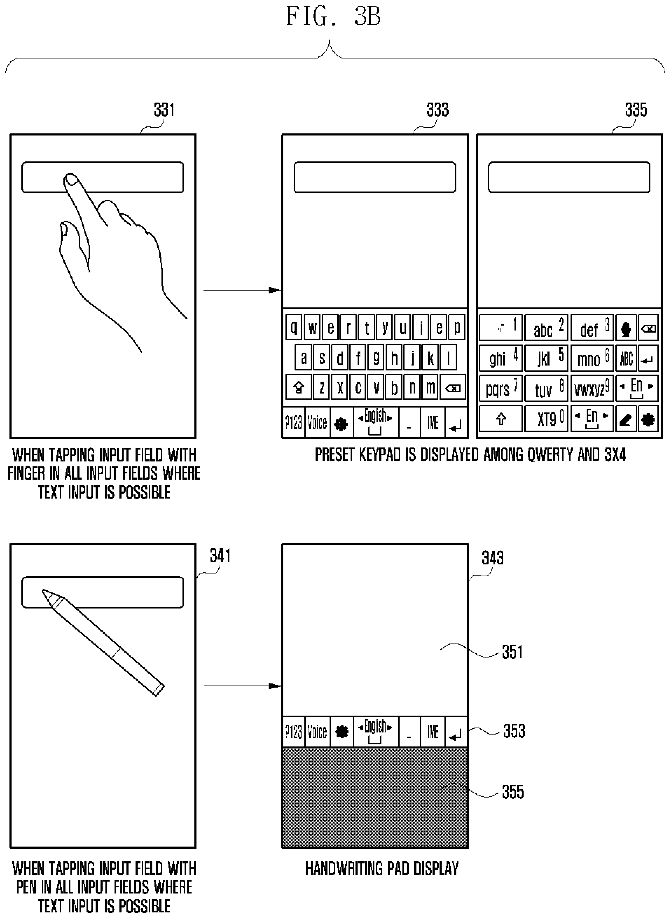

In order to efficiently process an input signal resulting from use of the above pen 10, the controller 110 can perform a pen input setting operation. FIG. 2 illustrates a pen setting procedure according to the exemplary embodiment of the present invention. Further, FIGS. 3A and 3B illustrate screens displayed in the display unit 130 in the process of performing a pen setting procedure as in FIG. 2.

Referring to FIGS. 2, 3A and 3B, in the state where a screen 311 as shown in FIG. 3A is displayed, if a pen setting mode is selected, the controller 110 senses the pen setting mode in step 211. If no pen setting mode is detected in step 211, the method proceeds to step 250 to perform a corresponding function. However, if a pen setting mode is detected in step 211, the method displays a screen 313 as shown in FIG. 3A in step 213. The function, which can be set for the pen setting mode, can set a shortcut, a user touch area and a handwriting pad. First, the shortcut is defined as a function for quickly executing a certain application, the preferred hand side is defined as an area of the touch panel 120 where pen touches mainly occur, and the pen detection is for setting whether to turn on the handwriting when executing an application for performing a letter input.

At this time, if the user selects shortcut settings, the controller 110 senses the selection in step 215, and displays a menu of application items which can perform a shortcut function 315 as shown in FIG. 3A in step 217. FIG. 3A displays examples of memo items; for example, an "S memo" function is a rich memo function capable of writing various memos using the pen 10 in the portable terminal 100, with a rich memo being an electronic memo which can combine a handwriting, a drawing, an audio file, and an image, etc., and a "quick memo" function is a handwriting memo function. Hence, a user of the portable terminal 100 of the present invention can select one of the items or functions displayed in the menu 315, and if an item is selected, the controller 110 senses the selection in step 219, and registers the selected item as a shortcut in step 221; otherwise, in step 219, if no item is selected, the method loops back to continue to display items or functions to be selected in step 217. The shortcut function can be mapped with one of the second inputs determined by the controller 110 when the pen 10 is in the second input state as described above. The actions 317 shown in FIG. 3A may include the double click second input, and an example of the case of being set to a quick memo has been used as the default value of the shortcut. After step 221, the method checks in step 235 if a terminate command is entered. If so, the method ends; otherwise, the method loops back to continue displaying a setting item in step 213.

Further, if no shortcut is detected in step 215 to have been set, the method checks for the selection of a touch area setting, and if a user selects a touch area setting to be a preferred hand side instead of a touch area mode, the controller 110 senses the selection in step 223, and displays a touch area item in step 225. This is a function that is applied to the entire portable terminal 100, and is for separately recognizing touch areas for right-hand users and left-hand users according to the gradient of a pen 10 when the user uses the pen 10. At this time, if the user selects a touch area item to be right-handed or left-handed, the controller 110 senses the selection in step 227, and determines the touch area of the touch panel 120 according to the selected item in step 229. That is, the controller 110 checks whether the user is right-handed or left-handed, and then sets the touch area in the touch panel 120 according to the result of the selection, and the recognition ability for the set touch area is enhanced than that for other areas. After step 229, the method proceeds to step 235. However, if no touch area item is selected in step 227, the method loops back and continues to display the touch area item in step 225.

Further, if the user has set the touch area mode in step 223, the method checks if a pen detection mode has been set in step 231. If so, the method proceeds to step 235. Otherwise, if a user is to select a pen detection mode, the controller 110 senses the selection in step 231, and displays a message to set the on or off state of the pen detection mode and to determine whether or not to display a handwriting pad based on the on or off state, in step 233. Further, if the user selects the pen-off state at step 233, the portable terminal 100 is set to display an IME, such as a last IME screen which has been used before in the text input mode of the portable terminal 100, and if the user selects the pen-on state at step 233, the portable terminal 100 is set to display the handwriting pad at the text input mode of the portable terminal 100. Here, the text input mode of the portable terminal 100 can be a mode for executing an SMS or other text message application, an e-mail application, or a messenger application, etc. At this time, in case the text input mode is performed in the state where the pen detection mode is off, the controller 110 displays the previous IME in the display unit 130. If a hand touch is sensed as shown in the screen 331 in FIG. 3B, in the state where the pen detection mode is on, the controller 110 analyses the previous IME, and if the mode is a QWERTY mode, the screen 333 is displayed by the display unit 130, but if the mode is a 3*4 keypad mode, the screen 335 is displayed by the display unit 130, as shown in FIG. 3B. If the touch of the pen 10 is sensed on the screen 341 shown in FIG. 3B, the controller 110 displays a handwriting pad 343. In the handwriting pad, the user writes letters using the pen 10 in the area 355, and the written letters are recognized and are displayed in the area 351. Further, the user can write sentences using items such as soft keys, displayed in the area 353 while performing a handwriting operation.

After performing the pen setting mode as in FIG. 2, if the user terminates the pen setting mode, the controller 110 senses the action and terminates the pen setting mode in step 235 of FIG. 2.

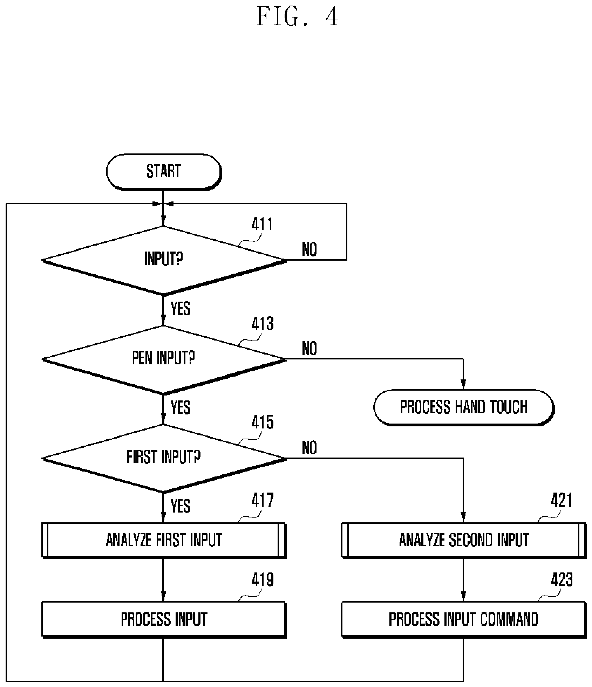

After performing the pen setting mode, the user can perform or control operation of the portable terminal 100 using the pen 10. FIG. 4 is a flowchart illustrating a procedure for performing or controlling an operation of the portable terminal 100 using the pen 10 according to the exemplary embodiment of the present invention.

Referring to FIG. 4, an input signal can be generated by the touch panel 120 of the portable terminal 100 in response to a touch input by touching the touch panel with the pen 10 or using a finger. At this time, if the touch input is by the pen 10 (a pen touch), the touch panel 120 generates an input signal, which is supplied to the controller 110 to determine the input in step 415. If no touch input is sensed by the touch panel 120, the method loops back to step 411 to continue checking for touch inputs. Once a touch input is sensed, the controller 110 checks in step 413 whether the input is a pen input. If not, the method determines that the touch input is not a pen input, and processes the inputs as hand or finger touches. Otherwise, the controller determines in step 413 that the input is a pen input, and checks whether the input is the first input of the pen 10 or the second input of the pen 10, as defined herein, in step 415. Here, the first input is determined by the controller 110 when the touch panel 120 generates a first input signal in response to a touch input in the state where the button 11 of the pen 10 has not been pushed. The second input is determined by the controller 110 when the touch panel 120 generates a second input signal in response to a touch input in the state where the button 11 of the pen 10 has been pushed. At this time, if the input is the first input, the controller 110 analyses a first input signal from the touch panel in step 417 and performs a corresponding operation according to the analysed result in step 419. The method then loops back to step 411. If the input is the second input in step 415, the controller 110 analyses the second input signal from the touch panel in step 421, and performs a corresponding command according to the analysed result in step 423. The method then loops back to step 411.

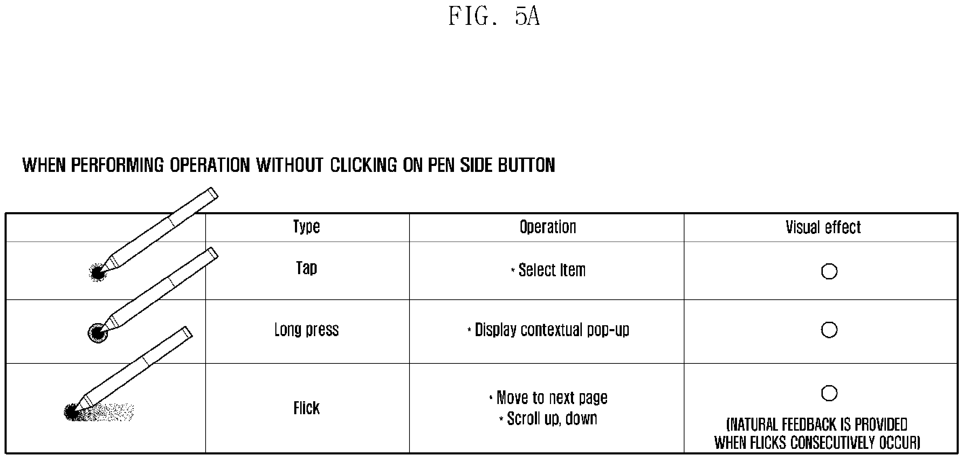

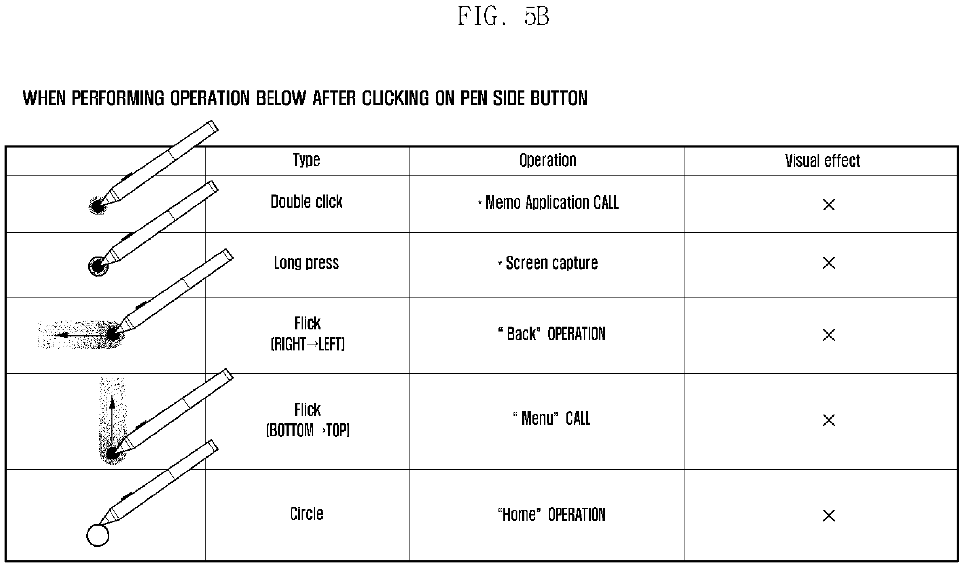

FIG. 5A illustrates an example of a form for a general input of a first input according to the exemplary embodiment of the present invention, and FIG. 5B illustrates an example of a form of a second input according to the exemplary embodiment of the present invention.

As shown in FIG. 5A, the first input can be a general input as in FIG. 5A, and a handwriting, a drawing and a crop, etc. A tap in the general input of the first input is a function for selecting an item in the application in operation, a long press is a function for displaying a contextual pop-up, and a flick is a function for moving to a next page or a previous page or scrolling up or down according to a right or a left direction, or an upward or a downward direction.

As shown in FIG. 5B, the second input is a hand gesture according to a touch of the pen 10 in the state where the button 11 has been pushed, and can be set to a command for performing a certain function of the portable terminal 100. That is, as illustrated in FIG. 5B, in the second input, a double click is moved to a memo mode. In the pen setting mode of FIG. 2, in the case where a quick memo is set as a shortcut function, the double click of the second input is set as a command for performing the shortcut. The double click is used as a command for performing the memo function. Further, in the above second input, the long press can be used as a screen capture command in the image processing mode, e.g., a mode for displaying moving pictures, such as a camera mode and an image display mode, etc. A flick can be used as a back or menu call command according to the horizontal or vertical direction of the movement of the user's hand performing the flick, and a round form input approximating a circle can be used as a command for moving to a home screen. That is, the second input can be used as an input for a command to perform a certain function in the state where an arbitrary application is performed in the portable terminal 100, and can be used as a command for directing the portable terminal 100 to perform a pre-set operation e.g., a screen capture, while a certain application is performed.

Here, the general input of the first input and the second input can use the same format. For example, the format can be a long press and a flick, etc.

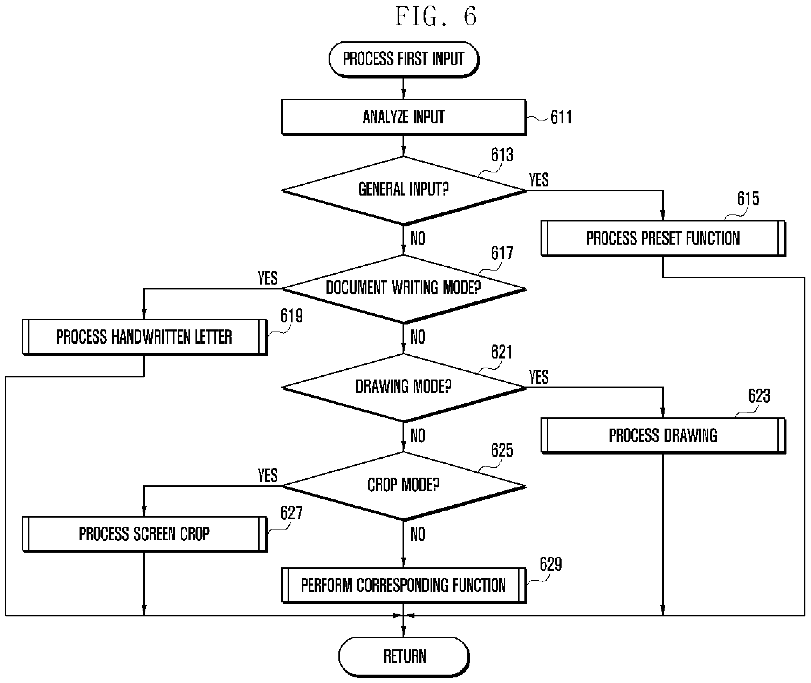

FIG. 6 is a flowchart illustrating a procedure for processing a first input performed at step 417 of FIG. 4.

Referring to FIG. 6, if the first input of the pen 10 is sensed by the touch panel 120, the controller 110 analyses the first input signal generated by the touch panel 120 in step 611 to determine the first input. The first input according to the exemplary embodiment of the present invention can be a general input as in FIG. 5A, a handwriting letter in the document writing mode, a drawing in the drawing mode, and a crop in the image-displaying mode, etc. However, the first input of the pen 10 can be further extended in addition to the above input. In the explanation below, a general input, a first input in the document writing mode, a drawing input and a crop input, etc. will be considered in order.

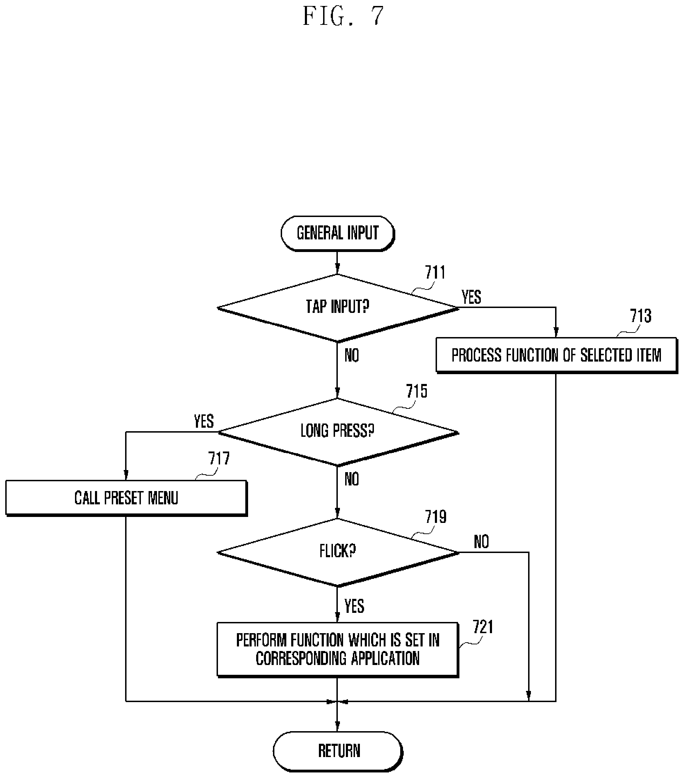

First, if the first input is a general input as in FIG. 5A, the controller 110 senses the general input in step 613, and processes the general input in step 615. The method then returns to complete step 419 in FIG. 4. FIG. 7 illustrates a procedure in greater detail for processing a general input of a first input processed in FIG. 6.

Referring to FIG. 7, if a tap input is generated, the controller 110 selects an item touched in the currently executed application by checking if the item is touched with a tap input in step 711, and if so, processing the function of the selected item in step 713, and the method returns to step 615 in FIG. 6. Further, if a tap is not input in step 711, if a long press is sensed as determined in step 715, the controller 110 calls a pre-set menu to be displayed as a contextual pop-up for a related function in the corresponding application in step 717, and the method returns to step 615 in FIG. 6. Further, if no long press is detected in step 715, if a flick is generated, the controller 110 senses the flick generation in step 719, and performs a function which is set according to the flick direction in step 721, and the method returns to step 615 in FIG. 6. Otherwise, in step 719, if no flick is detected, the method returns to step 615, in FIG. 6. At this time, if the flick is sensed as a horizontal direction, the controller 110 moves from the current page to the previous or next page, and if the flick is sensed as vertical direction, the controller 110 scrolls up or down the screen. FIG. 7 assumes the case where a general input of the first input is set as in FIG. 5A, but a different function can be performed according to the result of the mapping between the general input and the input type. Further, the case where the form of a general input is a tap, a long press and a flick has been described as an example, but a different form of a general input can be further added.

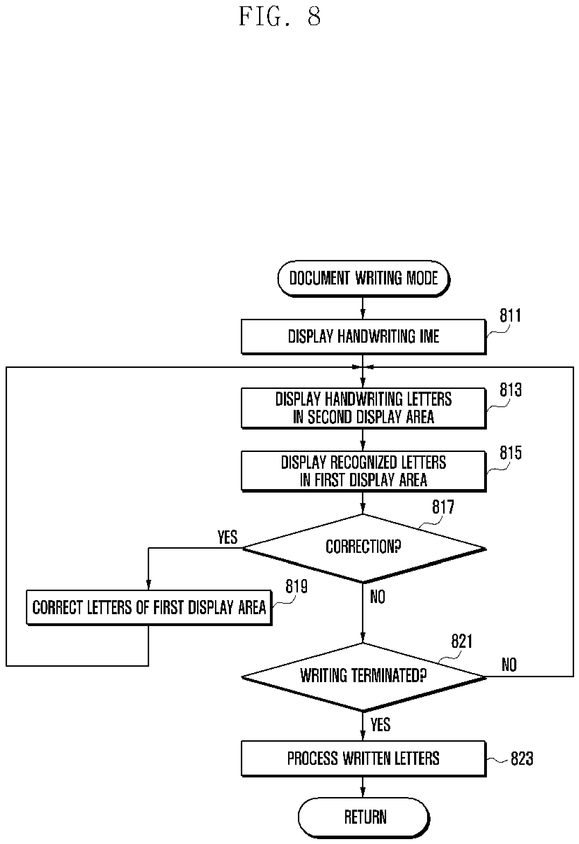

Secondly, referring back to FIG. 6, if no general input is detected in step 613, if the first input is a handwriting and the current application is in the document writing mode, the controller 110 senses the mode in step 617, and recognizes and processes handwritten letters in step 619. FIG. 8 illustrates a procedure for writing a document using the pen 10 according to the exemplary embodiment of the present invention. FIG. 8 illustrates an operation performed at step 619 of FIG. 6.

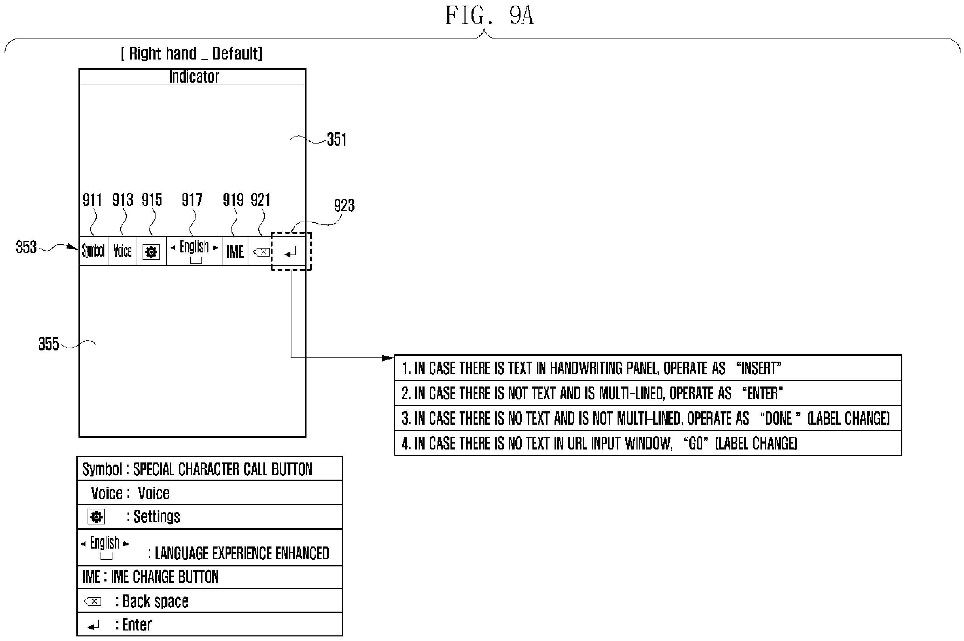

Referring to FIG. 8, the document writing mode can be performed in an application such as an SMS, an e-mail and a messenger application, etc. as explained above. In such a case, if the controller 110 senses that the pen 10 is touched or approaches the touch panel 120 within a certain distance, the controller 110 displays, in step 811, the handwriting pad as in FIG. 9A in the display unit 130. As shown in FIG. 9A, the handwriting pad comprises a second display area 355 that displays letters written by the pen 10, a first display area 351 that recognizes written letters and displays the letters, and an area that displays soft keys which are necessary for handwriting.

Here, the area 911 labelled "Symbol" is a functional key for calling special letters, and displays a combination of letters such as Roman characters, mathematical symbols, and special symbols, etc. The area 913 labelled "Voice" performs a function for inserting a voice or other audible sounds in the document writing mode, and the area 915 which displays, for example, a compass or gear symbol, is an area where a setting function is performed to specify and save user-customized settings of the portable terminal 100. Further, the area 917 labelled, for example, "English", is an area for selecting a language, and if the user long-presses or clicks on the area 917, available languages are displayed in a contextual pop-up. At this time, the pop-up screen displays items of available languages such as English, French and Korean, etc. Further, the IME area 919 labelled "IME" is an area that changes the document writing pad, and in the state where the handwriting pad as in FIG. 9A is displayed, if the IME is selected, a QWERTY keypad or 3*4 keypad is displayed as shown in the area 335 of FIG. 3B. Further, the area 921 with the backspace or delete symbol is an area for performing a back space function, and if the area is selected, the controller 110 moves the current position of the cursor, for example, in a horizontal backward direction. The area 923 with the Enter or Return symbol is an enter key area, and performs an enter key function of a document being written. At this time, in case the enter key area is touched, the controller 110 performs an inserting operation if there is a text in the second display area 355, and in case there is no text in the second display area 355 and the area is multi-lined, an enter key operation is performed, while in case there is no text and the area is not multi-lined, a "done" function is performed, and in the case of an e-mail, if there is no text in the URL input window, a "go" function is performed.

In the state where the handwriting pad is displayed as in FIG. 9A, the method in FIG. 8 performs step 813 after step 811, in which the controller 110 displays handwriting letters in the second display area 815, when the user can generate handwritten letters in the second display area 355. Then the controller 110 senses the handwritten letters generated according to the movement track of the pen 10 through the touch panel 120, displays the letters in the second display area 355, recognizes handwritten letters displayed in the second display area 353 and displays the letters in the first display area 351 in step 815. At this time, the recognition method can use a completed recognition method known in the art, in which entered symbols are recognized in word units, or a stroke recognition method known in the art. Further, in case a wrong recognition occurs in the process of writing and recognizing a document as explained above, the controller 110 can display a recommended letter on the bottom of the first display area 315, or alternatively in an area which is set in a certain position of the handwriting pad, and if the user selects the displayed letter, the controller can insert the selected letter in the position of the corresponding letter of the first display area 351.

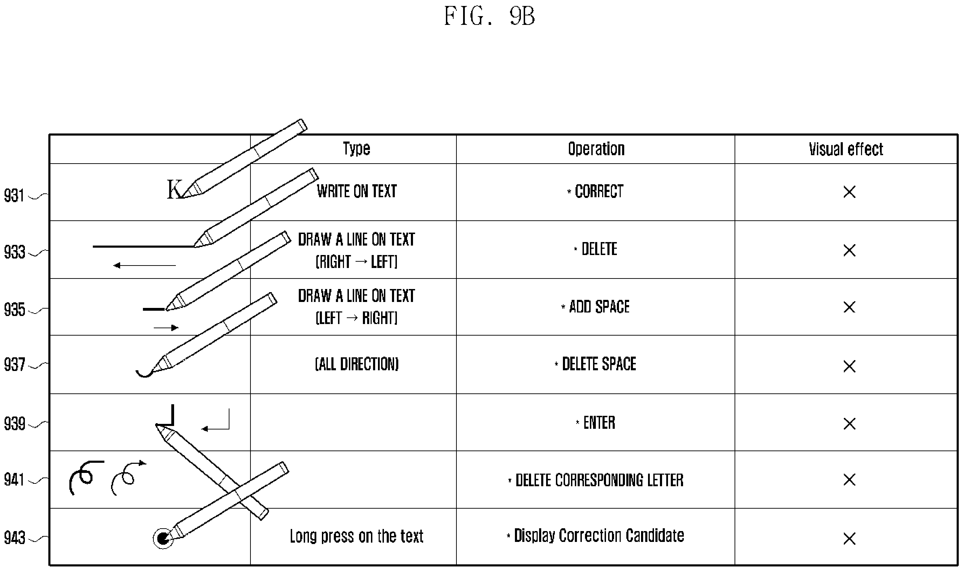

However, in case a wrong input of the user occurs or a wrong recognition occurs in the process of recognizing a letter, a user's correction is necessary. At this time, referring again to FIG. 8, after step 815, if there is a user's request for correction, the controller 110 senses the request in step 817, re-recognizes and corrects the handwritten letters inputted according to the user's document correction request in step 819, and loops back to step 813. At this time, it is desirable for the above amendment of the letters to be directly corrected by the user's handwriting in the second display area 355. FIG. 9B illustrates a method for correcting letters according to the exemplary embodiment of the present invention. Further, the document correction is performed by the user handwriting general document correction letters.

Referring to FIG. 9B, letters incorrectly inputted by the user are corrected by overwriting the incorrectly inputted letters displayed in the second display area 355. For example, in case "US" is intended to be corrected to "UK" as shown in the area 931 of FIG. 9B, which is displayed in the second display area 355, the letter "K" is handwritten over the letter "S" as displayed in the second display area 355. In such a case, the controller 110 recognizes the overwritten letter in the second display area 355 as a letter correction, and thus changes the previously written letter to the later written letter and displays the corrected letters in the first display area 351. Further, when writing a document, in case a line or a word is intended to be deleted, as shown in the area 933 of FIG. 9B, the user can draw a line, for example, from right to left on the corresponding letters displayed in the second display area 355. In such a case, if the controller 110 recognizes a line drawn from right to left, the controller 110 deletes the letters positioned in the line and displays the result in the first display area 351. In the method as described above, if line drawing from right to left on the written letters is sensed in the area 935 of FIG. 9B, the controller 110 makes a space between the previous letter and the corresponding letter, and if the written letter is connected to the letter as shown in the area 937 of FIG. 9B, the controller 110 removes the space between the letters. If line drawing of an entered shape is sensed as shown in the area 939 of FIG. 9B, the controller 110 performs a line changing function in the corresponding position, and if a gull-type touch occurs as shown in the area 941 of FIG. 9B, the controller 110 deletes letters written in the position of the gull-type touch. Further, if a long press occurs on the written letters as shown in the area 943 of FIG. 9B, the controller 110 displays words for correcting the letters on the pressed position, and if the user selects a displayed word, the word is selected. For example, if the letters displayed in the second display area 355 are "cook" and a long press of a pen 10 is sensed on the letters, the controller 110 displays words that can be substituted (e.g., "cook", "book" and "cool", etc.) in the pre-set position of the handwriting pad (e.g., the lower area of the first display area 351). Further, if a user-desired word is clicked on (tapped), the controller 110 substitutes the user-selected word with the long-pressed word.

As described above, letters handwritten in the second display area 355 of FIG. 9A are recognized and are displayed in the first display area 351. At this time, referring back to FIG. 8, if a correction as in FIG. 9B occurs, the controller 110 senses the correction in step 817, and corrects written letters or documents according to the correction request (letter correction, sentence or word deletion, space addition, space deletion, line change, letter deletion, and letter change selection, etc.). At this time, the above amendment can be directly done on the letters displayed in the second display area 355, and the controller 110 can sense the input of the pen 10 according to the user's correction request and perform a document correction procedure. Hence, it is seen that the document correction procedure can be conveniently performed by a user using the portable terminal 100 with the touch panel 120 and the components and methods of the present invention.

If the above handwriting letter input and correction are performed, the controller 110 recognizes the input and correction, and displays the result in the first display area 351. Further, in the state where the above document writing mode is performed, if a termination command occurs, the controller 110 senses the generation of the termination command in step 821, and processes the written letters in step 823. At this time, the method of processing the above written letters varies depending on the document writing mode. That is, in the case of an SMS, the written document is transmitted to a pre-set phone number subscriber and at the same time, is stored in the memory 140. In the case of a memo, a corresponding memo (an alarm and schedule, etc.) can be stored in the memory 140 according to the user's designation. After step 823, the method returns to complete step 619 in FIG. 6, to return to complete step 419 in FIG. 4.

FIG. 8 illustrates a method of processing written letters of the first input in the state where a handwriting pad is displayed in the document writing mode, but even in the state where the handwriting pad is not displayed, it is possible to recognize handwritten letters as a document. In such a case, the controller 110 displays the handwritten letters in the display unit 130, and if the user generates a recognition command, handwritten letters being displayed can be recognized and be converted into a document.

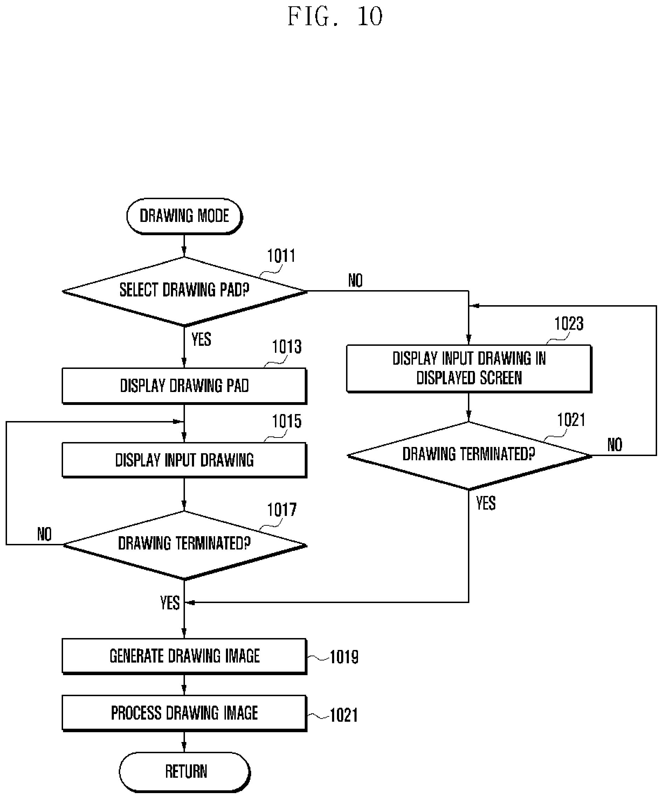

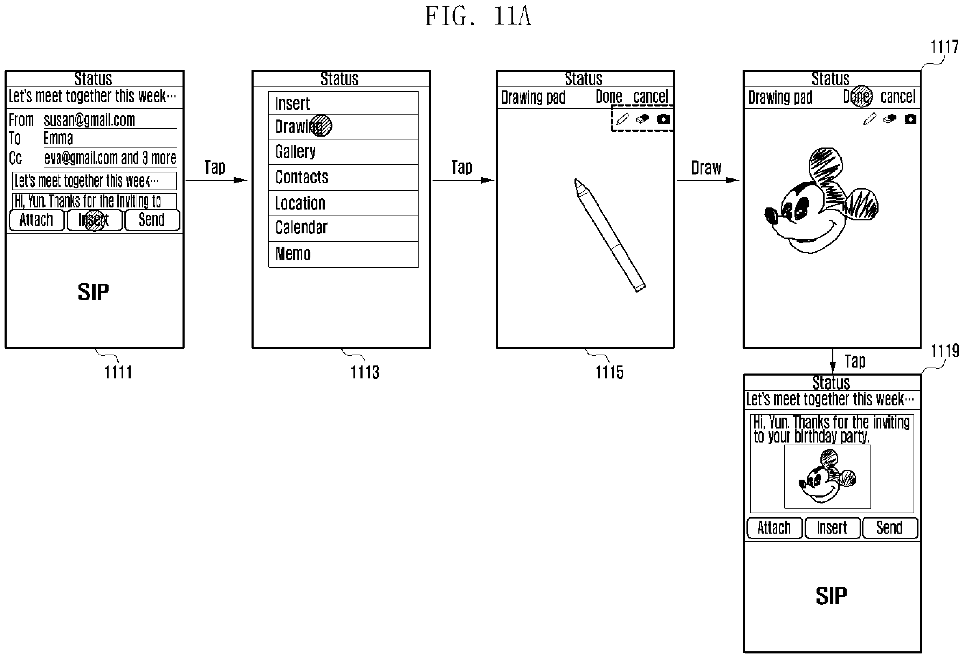

Third, referring back to FIG. 6, in step 617, if a document writing mode is not detected, if a drawing of a first input through the pen 10 is sensed, the controller 110 senses the drawing at step 621 of FIG. 6, and senses and processes the drawing inputted through the pen 10 at step 623. FIG. 10 illustrates a procedure for processing a drawing input in the exemplary embodiment of the present invention, and illustrates the operation procedure of step 623 of FIG. 6. FIGS. 11A to 11G illustrate an example of performing a drawing mode as in FIG. 10.

Referring to FIG. 10, in the case of drawing, the user can select the drawing mode and perform a drawing operation, and can perform handwriting or drawing in a currently operated application. That is, as illustrated in FIG. 11A, in case the user intends to insert or add a drawing in a document written in the document writing mode, and then transmit the document, the user can enter the drawing mode in the application and can perform the drawing operation, and then insert or add the drawing in the document. Further, by performing a drawing operation in the image in the currently operated application, the drawing can be overwritten.

If the user selects an indication of a drawing pad to be used in the drawing mode, the controller 110 senses the selection in step 1011, the controller 110 temporarily stops the current application and displays the drawing pad in step 1013. For example, as shown in the screen 1111 of FIG. 11A, if a tap function is performed while writing an e-mail document, selectable items are displayed as shown in the screen 1113, and here, if the drawing is tapped (clicked) as a first input using the pen 10, the controller 110 displays the drawing pad as shown in the screen 1115. Thereafter, if the user draws on the drawing pad using the pen 10, the controller 110 senses the drawing through the touch panel 120 and displays the drawing in the display unit 130 as shown in the screen 1117 in step 1015. Thereafter, if the user terminates drawing (i.e., touches "done" on the screen 1117), the controller 110 senses the touch in step 1017, generates a drawing image as shown in the screen 1119 in step 1019, and process the image in step 1021. After step 1021, the method returns to complete step 623 in FIG. 6, to return to complete step 419 in FIG. 4.

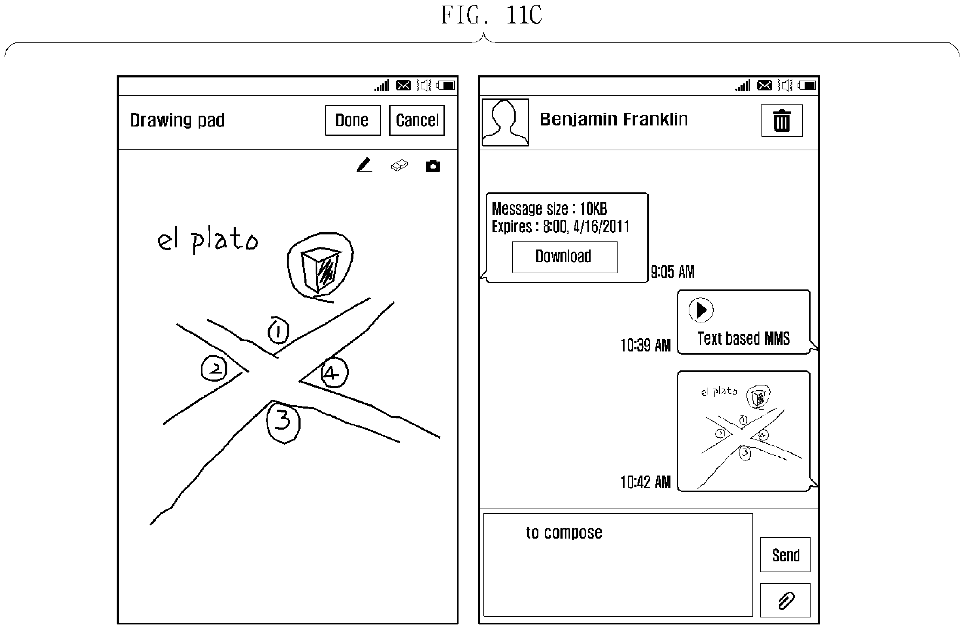

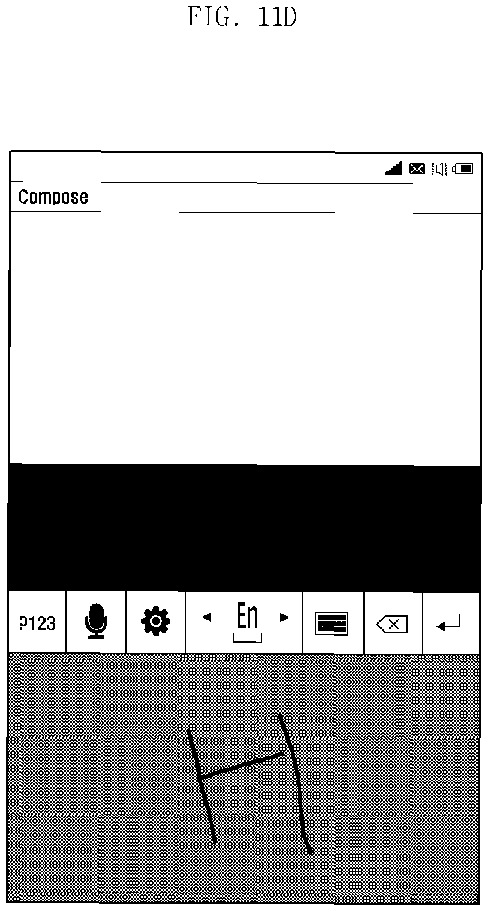

That is, in case a drawing mode is selected while writing an e-mail as in FIG. 11A, the controller 110 displays the drawing pad as shown in the example screen 1115, and displays the user's drawing on the drawing pad. Thereafter, if the drawing is terminated, the controller 110 inserts the generated drawing in the e-mail message, and if the user selects a function such as a transmission function, a message including the drawing image is transmitted to the other person; that is, the e-mail recipient, and at the same time, is stored in the memory 140 of the sending user's portable terminal 100. As explained above, among applications that perform a drawing function using a drawing pad, as shown in FIG. 11C, a document writing application (a message application such as a message and an e-mail, etc.) provides a drawing pad which allows for drawing a picture while writing a message, and thus it is possible to transmit a picture along with a message. Further, as shown in FIG. 11D, an application which provides a handwriting pad (i.e., applications where a text input is possible) can perform a drawing function where the user can directly handwrite on the touch panel 120 and display unit 130 displaying the screen in FIG. 11D.

Further, referring back to FIG. 10, in the case of applications which can perform drawing without using the drawing pad, in case that the user generates a drawing of a first input using the pen 10, the controller 110 senses generation of such a drawing without a drawing pad in step 1011, and proceeds to step 1023 to display the drawing generated from the user on the current screen. Thereafter, if the user terminates drawing, the controller 110 senses the termination in step 1025, generates a drawing image in step 1019, and processes the generated image according to the user's command in step 1021, and then the method returns to complete step 623 in FIG. 6, to return to complete step 419 in FIG. 4. However, in step 1021, if the drawing operation is not terminated, the method loops back to step 1023 to continue processing an input drawing.

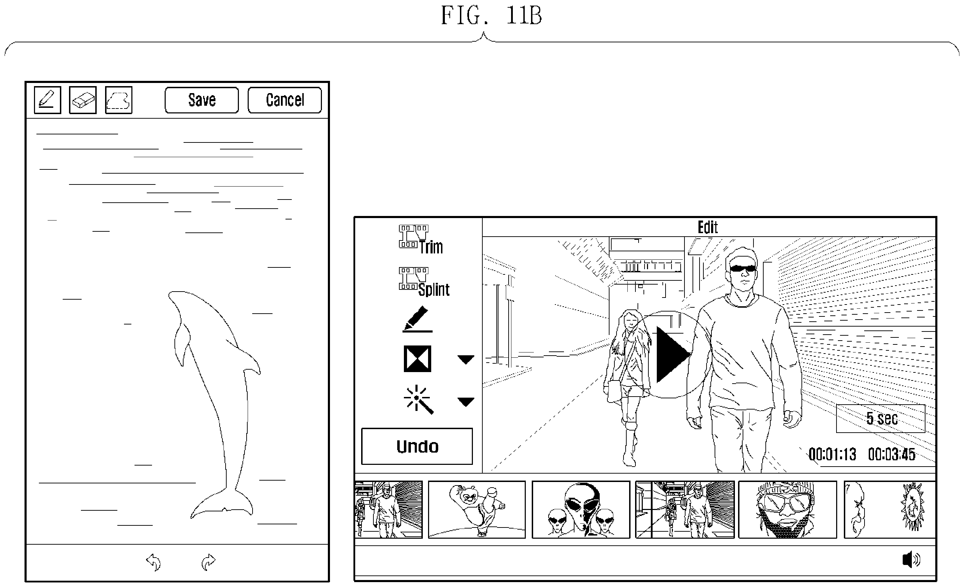

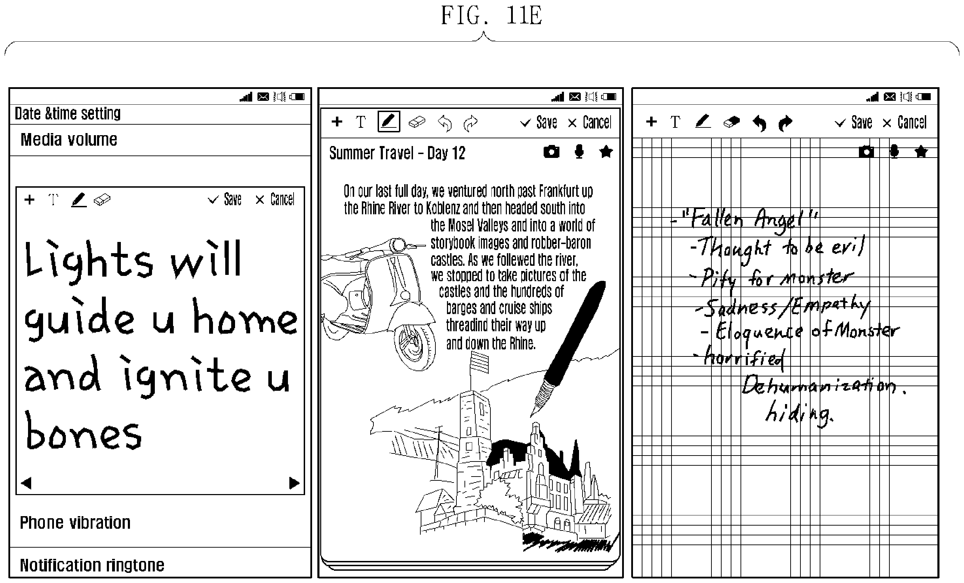

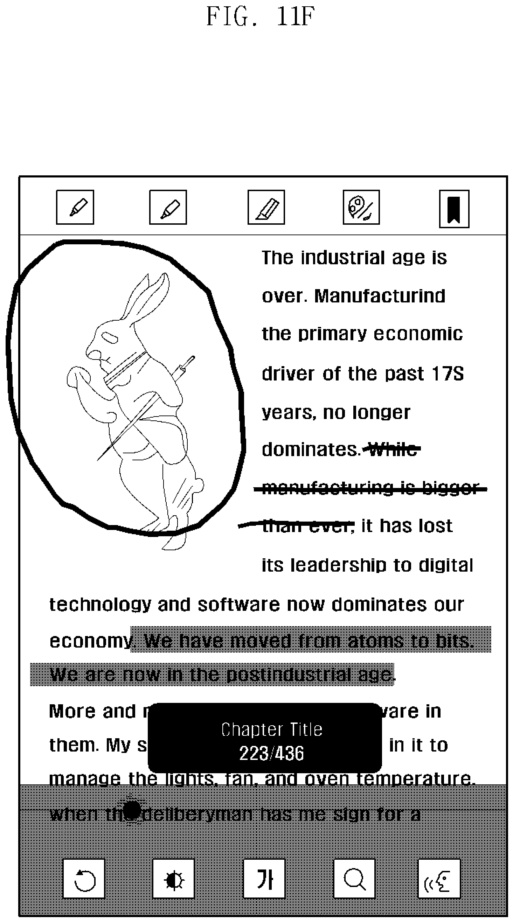

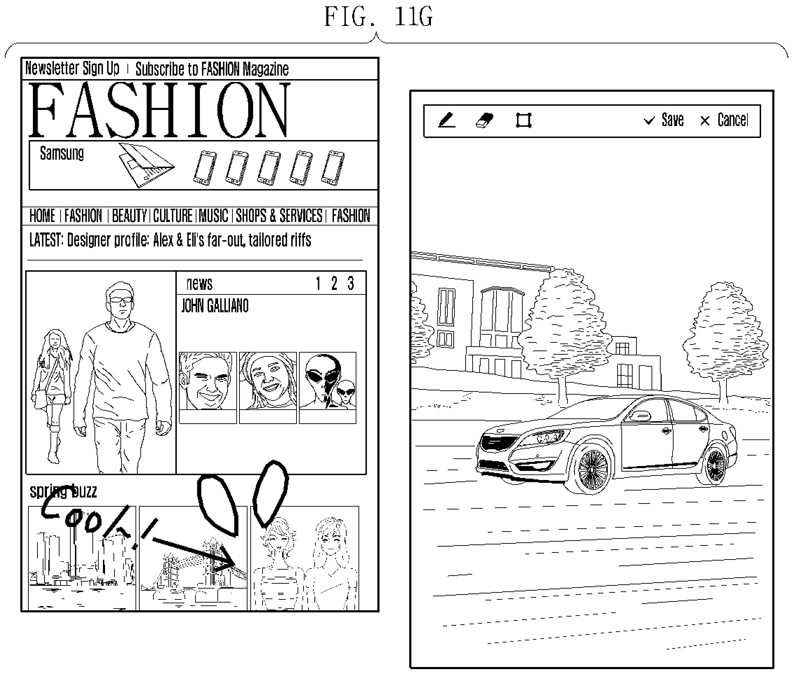

There are some applications where drawing can be performed without using a drawing pad as explained above. For example, in the case of a currently executed multimedia application (e.g., a photo editor, a video maker and a gallery application, etc.), as shown in the example screens in FIG. 11B, the user can directly draw on a multimedia image displayed by the display unit 130, and generate an image to which the user's drawing has been added. Further, in the case of a memo application that provides a handwriting function (e.g., a quick memo and a rich memo application, etc.), as shown in the example screens in FIG. 11E, the user can generate a handwritten memo as an image and process the image. That is, handwritten letters written in the memo application can be generated as an image as in the drawing. Further, in an application displayed as an image (e.g., an e-book application), the user can directly perform handwriting and drawing such as writing notes and highlighting, etc. on the displayed image, as shown in the circled image and crossed-out text in the example screen shown in FIG. 11F, to generate a drawing image. Further, in an editable application (e.g., an editable screen capture application, etc.), as shown in the example screens in FIG. 11G, the user can generate a drawing image by directly writing on the screen, such as the annotation "Cool-!" and other markings shown in FIG. 11G. In such a case, a handwriting-editing-possible screen capture function can be provided, and the corresponding drawing function can be performed in all screens displayed in the portable terminal 100. For example, in applications which display an Internet-based surfing magazine screen and document screen, etc., the drawing can be performed in the screen, and the screen can be edited.

Fourth, referring back to FIG. 6, after no drawing mode is detected in step 621, in the state where an image is displayed in the screen, if the user draws on a certain location of a displayed image using a pen (drawing a circular or polygonal closed curved line) and selects a crop function, the controller 110 senses the selection in step 625, and crops the screen and processes the cropped screen in step 627. For example, in the state where an image such as a photograph is displayed in the display unit 130, if the user draws a closed curved line, selects a crop item and touches (tap or click) the item, the controller 110 recognizes an image crop, and captures and processes the image inside the closed curve. Further, the cropped screen can be stored in the memory 140, and can also be generated as a new image by inserting the image into or adding to another screen. After step 627, the method returns to complete step 419 in FIG. 4. However, referring back to step 625, if crop mode is not selected, the method performs a corresponding function in step 629 and returns to complete step 419 in FIG. 4.

As described above, in case a touch input is sensed by the touch panel 120 in the first input state where the button 11 of the pen 10 is not pushed, the touch panel 120 generates a first input signal which is received by the controller 110. The controller 110 determines that the input is the first input at step 415 of FIG. 4, and if the first input is determined, the controller 110 recognizes a general input, handwriting, drawing or crop operation according to the inputted form, and processes the corresponding application at steps 417 and 419. However, in case a touch input is sensed by the touch panel 120 in the second input state where the button 11 of the pen 10 is pushed, the touch panel 120 generates a second input signal which is received by the controller 110. The controller 110 determines that the input is the second input at step 415 of FIG. 4, and if the second input is sensed, the controller 110 processes the command according to the hand gesture of the second input in steps 421 and 423. Here, the other second inputs except a certain input (e.g., a long press) perform applications corresponding to the command regardless of the currently executed application.

As described above, the first input of the present invention is inputted without pushing the button 11 of the pen 10. The first input can provide all interactions done by fingers in the same manner with the pen 10. At this time, the first input can perform a pen-specialized function in the application.

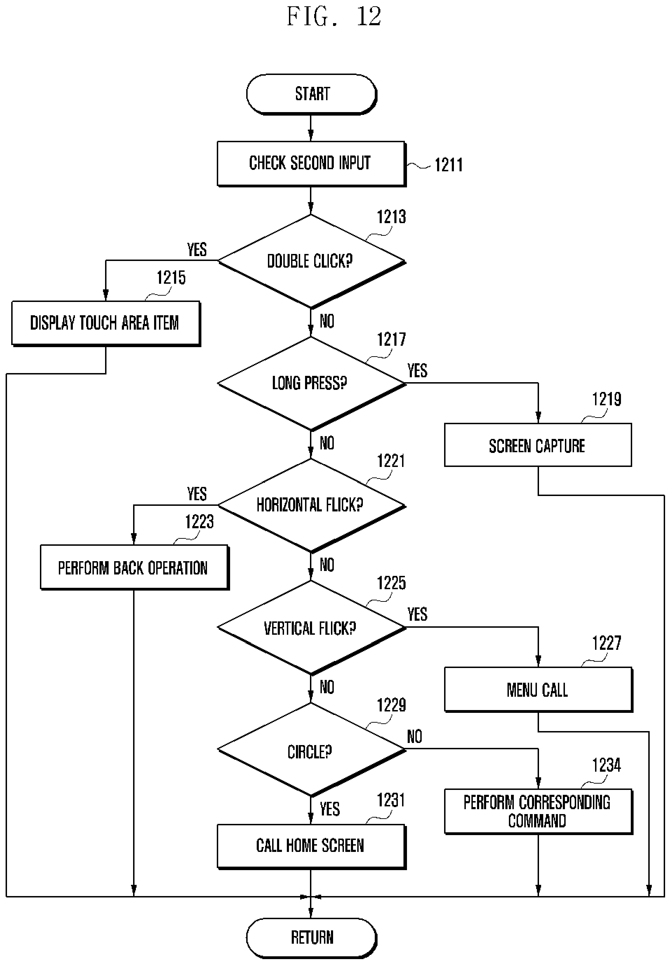

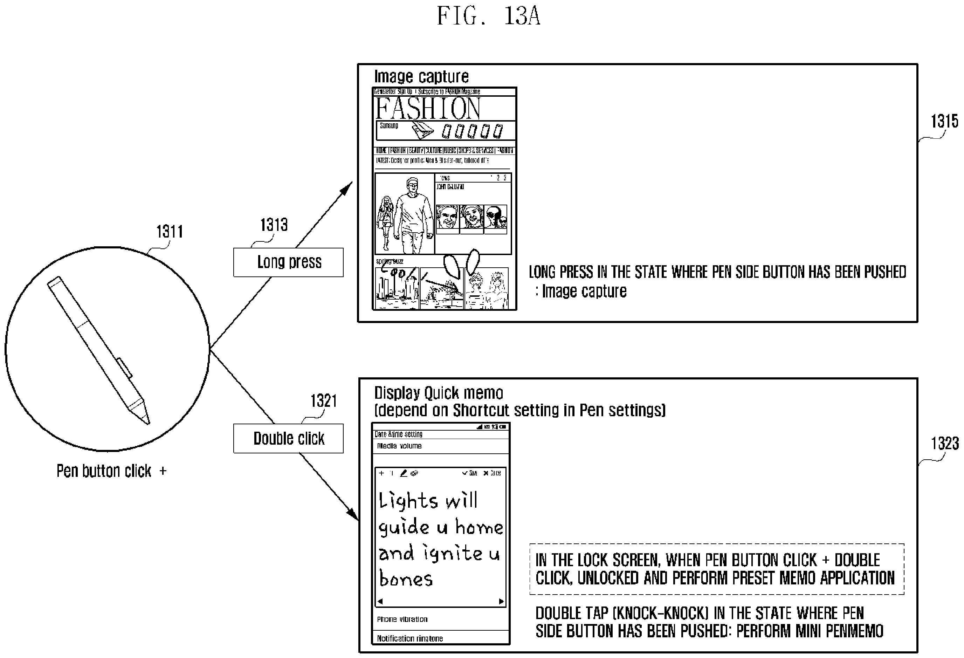

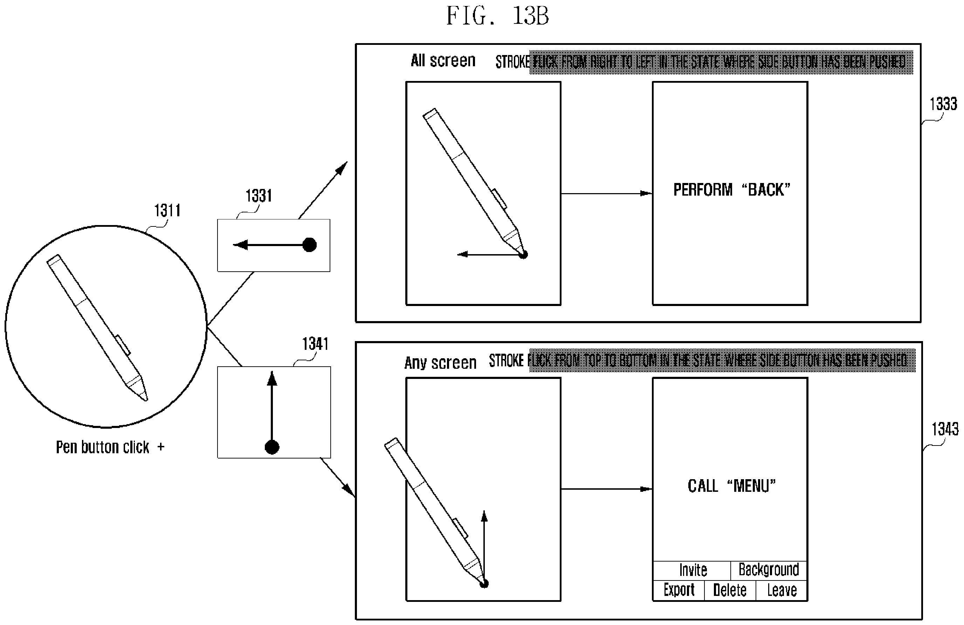

FIG. 12 is a flowchart illustrating a procedure for processing a second input according to the exemplary embodiment of the present invention, and FIGS. 13A and 13B illustrate an example processed while performing a procedure as in FIG. 12.

Referring to FIGS. 4 and 12, if the second input is determined by the controller 110 in step 415, the controller 110 checks the second input and then analyses the form of the second input in step 421, and proceeds to step 1211. At this time, if the second input is a double click, the click is sensed in step 1213, and a pre-set application is called and processed in step 1215. At this time, the setting of the application can be a shortcut application which is set in the pen setting procedure as in FIG. 2. For example, in case the shortcut application is set to the quick memo, if a double click occurs in the state where the button 11 of the pen 10 is clicked as shown in the representation 1311 of the pen 10 followed by the double click operation 1321 of FIG. 13A, the controller 110 displays a quick memo, which is set as a shortcut 1323, shown in the display unit 130. The method then returns to complete step 421 and process the input command in step 423 in FIG. 4.

Further, referring to FIG. 12, if no double click is detected in step 1213, if the second input is a long press, the controller 110 senses the input in step 1217, and captures a screen displayed in the application currently in operation in step 1219. At this time, the application can perform additional applications for displaying the screen image. For example, as shown in the representation 1311 of the pen 10 followed by the long press operation 1321 of FIG. 13A, if a long press occurs in the state where the button 11 of the pen 10 is clicked on, the controller 110 captures the displayed image and displays the captured image 1323 in the display unit 130. The method then returns to complete step 421 and process the input command in step 423 in FIG. 4.

Further, referring to FIG. 12, if no long press is detected in step 1271, if the second input is a horizontal flick, the controller 110 senses the input in step 1221, and performs a command which has been set for the horizontal flick in step 1223. Here, in an exemplary embodiment of step 1223, the horizontal flick is performed from right to left, and the pre-set command has been set to perform a back function. In such a case, as shown in the representation 1311 of the pen 10 followed by the horizontal flick operation 1331 of FIG. 13B, if a flick is sensed from right to left in the state where the button 11 of the pen 10 has been clicked on, the controller 110 performs a "back" function represented by the operation 1333. The method then returns to complete step 421 and process the input command in step 423 in FIG. 4.

Further, referring to FIG. 12, if no horizontal flick is detected in step 1221, if the second input is a vertical flick, the controller 110 senses the input in step 1225, and performs a command which has been set for the vertical flick in step 1227. Here, in an exemplary embodiment, the vertical flick is performed from bottom to top, and the pre-set command is set to perform a menu call function. In such a case, as shown in the representation 1311 of the pen 10 followed by the vertical flick operation 1341 of FIG. 13B, if a flick is sensed from bottom to top in the state where the button 11 of the pen 10 has been clicked on, the controller 110 performs a "menu" call function represented by the operation 1343. The method then returns to complete step 421 and process the input command in step 423 in FIG. 4.

Further, referring to FIG. 12, if no vertical flick is detected in step 1225, if the second input is circle-shaped, the controller 110 senses the input in step 1229, and performs a command which is indicated within the circle on the touch panel 120 in step 1231. In an exemplary embodiment, the command, which is indicated within the circle-shaped second input, is a home screen call. The method then returns to complete step 421 and process the input command in step 423 in FIG. 4. However, in step 1229, of no circle shape is detected, the method proceeds to step 1234 to perform a corresponding command, and the method then returns to complete step 421 and process the input command in step 423 in FIG. 4.

As described above, the second input can be a hand gesture which is inputted in the state where the button 11 of the pen 10 has been clicked on, and the controller 110 analyses the sensed second input and performs each corresponding command. At this time, the second input can comprise an application call gesture such as a double tap and a long press, and a certain command execution gesture such as a right-to-left flick and a bottom-to-top flick, etc. The second input is a gesture input which is pre-set in the state where the button 11 of the pen 10 is pushed, and can improve the general usability of the pen 10, call applications such as a screen capture and a memo, etc. and perform a certain command such as "Back" and "Menu" by mapping the function of the hard key with the gesture of the pen 10 so that the use experience of the pen 10 can be continued.

Further, in the exemplary embodiment of the present invention, as described above, the first input and the second input are determined by the controller 110 in response to first and second input signals generated by the touch panel 120 in response to sensed pen touch inputs according to whether the button 11 has been pressed (and therefore whether the pen is in the first or second input state). The input state of the pen 10 is sensed by the touched panel through different magnitudes of changes of electricity of the touch panel 120 when the pen 10 touches the touch panel 120. That is, in the pen 10, the magnitude of generated electricity can be different depending on whether the button 11 is clicked or not, and such different magnitudes of electricity cause correspondingly different changes in electricity. In such a case, when the pen 10 is touched on the touch panel 120, different electricity changes are caused. Here, in the exemplary embodiment, the first input signal is generated by the touch panel 120 in the state where the button 11 of the pen 10 is not clicked on, and the second input signal is generated by the touch panel 120 in the state where the button 11 of the pen 10 is clicked on. However, even if the input signal generated by the touch panel 120 in the state where the button 11 of the pen is not clicked on is set to the second input, and the input signal generated by the touch panel 120 in the state where the button 11 of the pen is clicked on is set to the first input, the same operation can be performed.

In addition, in a portable terminal having a touch device, if a pen input function is used, various specialized services can be efficiently performed. One of such services is a memo function. The memo function of the portable terminal 100 of the present invention provides an integrated memo (a rich memo also called an s-memo) function which combines a letter, an image, a video and audio file, etc. Further, a portable terminal can used as a scheduler, and thus it is preferable that a quick memo function, capable of quickly performing a memo function, is added. Accordingly, the portable terminal 100 of the present invention, using the components and methods described herein, includes such a quick memo function.

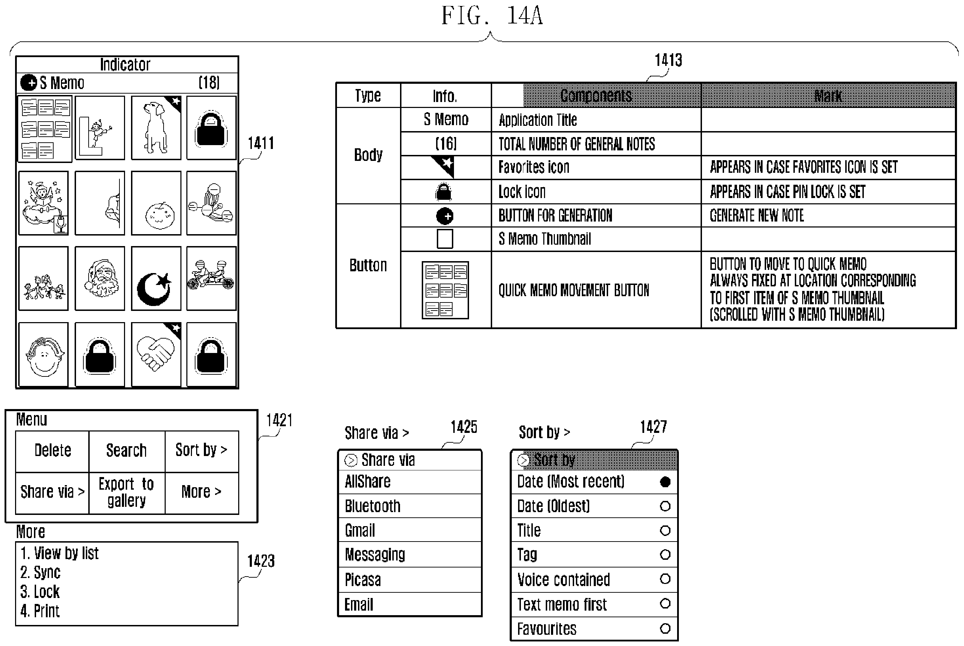

FIGS. 14A to 14C illustrate a rich memo list of the portable terminal 100 and a procedure for controlling the list according to the exemplary embodiment of the present invention.

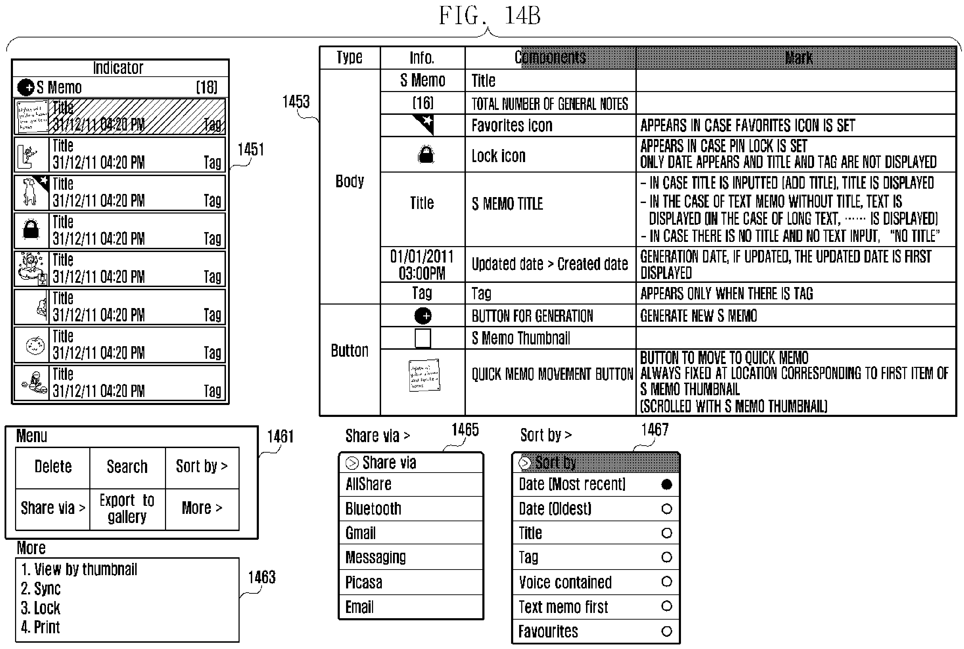

Referring to FIGS. 14A to 14C, FIG. 14A illustrates the rich memo as a list arranged by thumbnails, and FIG. 14B illustrates the rich memo as a list arranged by lists. Referring to FIG. 14A, the rich memo list 1411 illustrates the thumbnail items of the quick memo and rich memo as a list, and the feature of each item of the list can be defined by the settings as shown in the table 1413. Here, the quick memo button displays quick memos as one thumbnail, and rich memos are constituted respectively as corresponding thumbnails to constitute a list. In the state where thumbnail lists of the rich memo are displayed as a list 1411 of FIG. 14A, if a user menu is called, a menu 1421 of FIG. 14A is called, which may be a second input processed by steps 421-423 of FIG. 4. Here, the menu calling can be performed in response to a second input as described above, and as shown in FIG. 5B which shows different types of second input, in the state where the thumbnail list is displayed as the list 1411 of FIG. 14A, if the button 11 of the pen 10 is clicked on and is flicked from bottom to top, the controller 110 senses the flick as a menu call. Further, in the displayed menu 1421, if a corresponding item is clicked on (tap of the first input), the lists 1423, 1425, 1427 of the selected items is displayed.

The rich memo list of FIG. 14B has a form which is different from the form of the thumbnail list of FIG. 14A, and so the items 1451, 1453, 1461, 1463, 1465, 1467 of the rich memo list respectively correspond to the items 1411, 1413, 1421, 1423, 1425, 1427 of the thumbnail list shown in FIG. 14A.

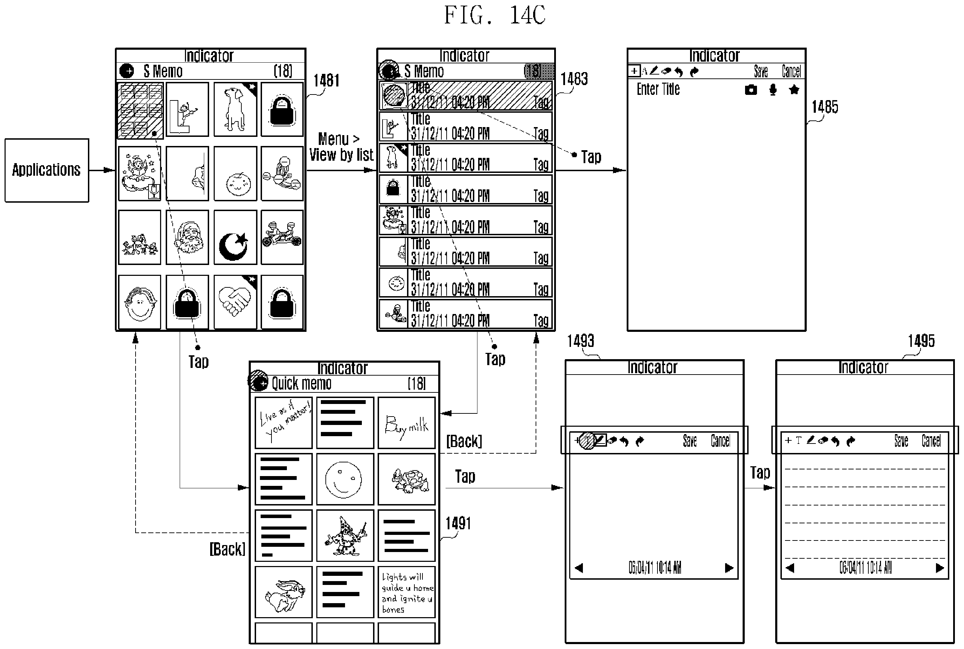

FIG. 14C illustrates a procedure for selecting the rich memo and the quick memo according to the exemplary embodiment of the present invention. As shown in the thumbnail list 1481, if a quick memo button is clicked on (tap) in the thumbnail list screen 1481, a quick memo list 1491 is displayed. Further, as shown in the quick memo list 1491, in the state where such a quick memo list 1491 is displayed, if a second input of the horizontal flick (right to left) is generated using the pen 10, the controller 110 displays the thumbnail list 1481 of the rich memo. Further, in the state where the thumbnail list 1481 of the rich memo is displayed, if a second input of the vertical flick (bottom to top) is generated using the pen 10, the controller 110 calls a menu, and can display the list 1483 of the rich memo by the user's selection.

Further, in the state where either of a rich memo list 1481, 1483 is displayed, if the user clicks on the generation button using the pen 10, an example of a drawing pad 1485 is generated, and the user can write a rich memo through the drawing pad 1485. Further, for the quick memo list 1491, in the state where the quick memo list 1491 is displayed, if the user clicks on the quick memo (tap of the first input), the drawing pad 1493 or the text pad 1495 is generated, and the user can generate the quick memo as the drawing or text using the drawing pad 1493 or the text pad 1495.

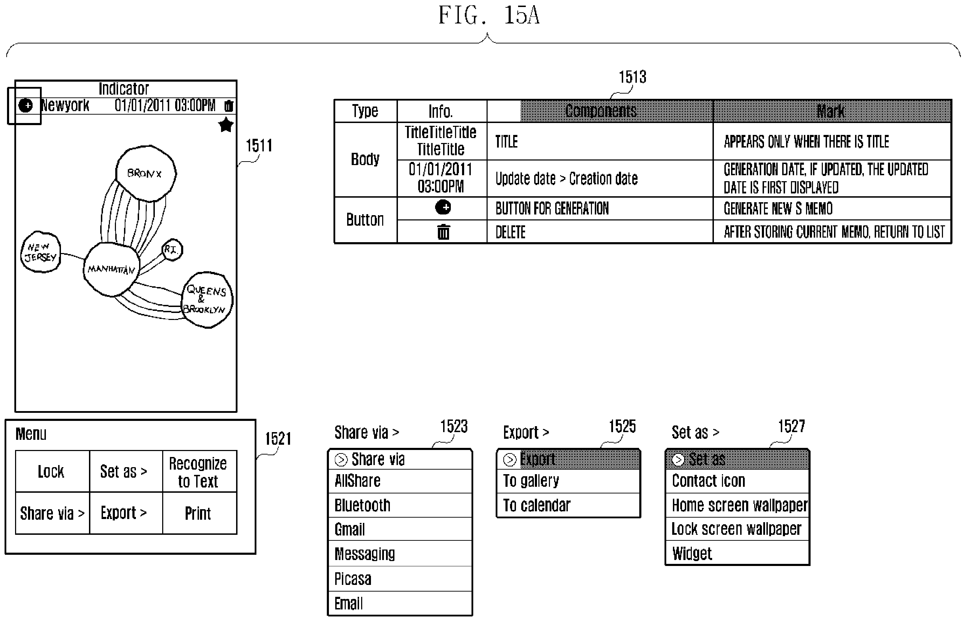

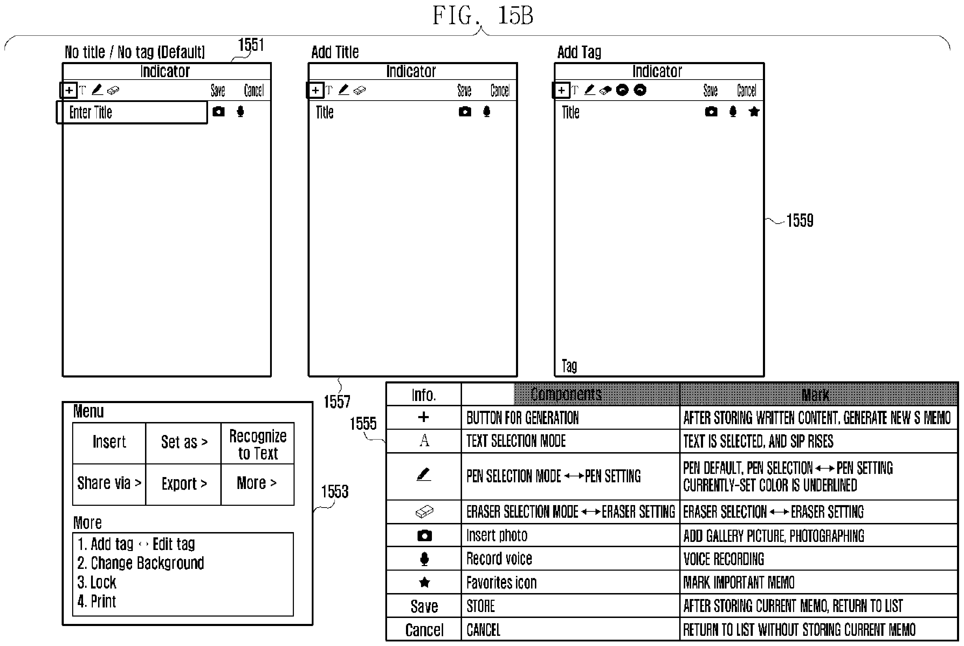

FIG. 15A illustrates an example of a rich memo according to the exemplary embodiment of the present invention, and FIG. 15B illustrates an example of a drawing pad used in a rich memo.

Referring to FIGS. 15A and 15B, in the state where the list of the rich memo is displayed, if the user selects a certain rich memo thumbnail (or an item on the list), corresponding rich memos 1511 are displayed as shown in FIG. 15A. At this time, the rich memo has a structure 1513. Further, in the state of the rich memo 1511, if a menu is called by the second input as described above, a menu 1521 is called, and sub-menus 1523-1527 can be selected from the called menu 1521.

Further, in the state where a certain rich memo is displayed, if the user pushes a generation button, a drawing pad 1551 of FIG. 15B is displayed. Here, the drawing pad 1551 can have menu 1553 and various settings 1555. Using the menu 1553 and settings 1555, the user can add a title to the drawing which is drawn or to be drawn in the drawing pad 1551, such that the added title appears, for example, near the top of an updated drawing pad 1557 on the touch panel 120. Further, using the menu 1553 and settings 1555, the user can add a tag identifying the drawing which is drawn or to be drawn, such that the tag appears, for example, near the bottom of an update drawing pad 1559. In addition, the rich memo can perform an image generation in response to the drawing operation by the user, as well as performing an image insertion and an audio sound, etc. as well as a text memo. At this time, the method of writing the rich memo can be performed using the pen 10. Here, methods such as text writing, drawing and cropping of the first input can be used, and an operation of the rich memo application by the generation input can be controlled. Here, the handwriting of the rich memo can be performed in the drawing pad 1551, the handwritten letters can be processed as an image, and a recognition command can be generated and recognized through the menu. That is, the rich memo can be written through drawing and handwriting, etc. using the pen 10, and a video and/or audio file can be inserted into the written rich memo. Further, the handwritten letters can be converted into data by a recognition command and can be stored when necessary. Further, the written rich memo can be stored in the memory 140, and can be transmitted to an external device or an external subscriber through the communication unit 150.

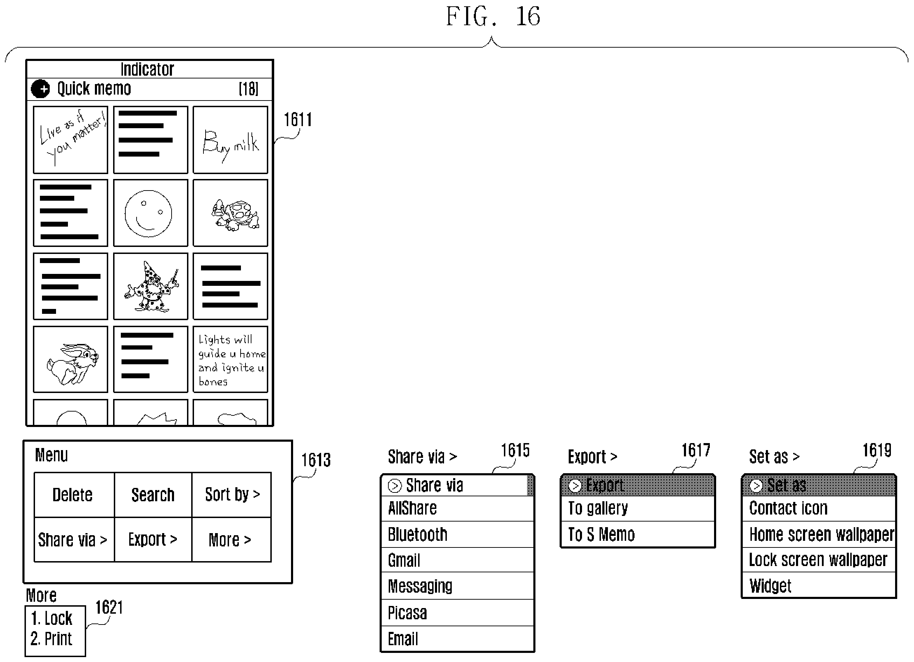

FIG. 16 illustrates a quick memo list included in a rich memo according to the exemplary embodiment of the present invention. Quick memos are displayed as a thumbnail list, such as the example thumbnail list 1611, and when a second input of the menu call is generated, a menu 1613 is displayed and sub-menus 1615-1621 can be selected for performing functions on the thumbnail list 1611.

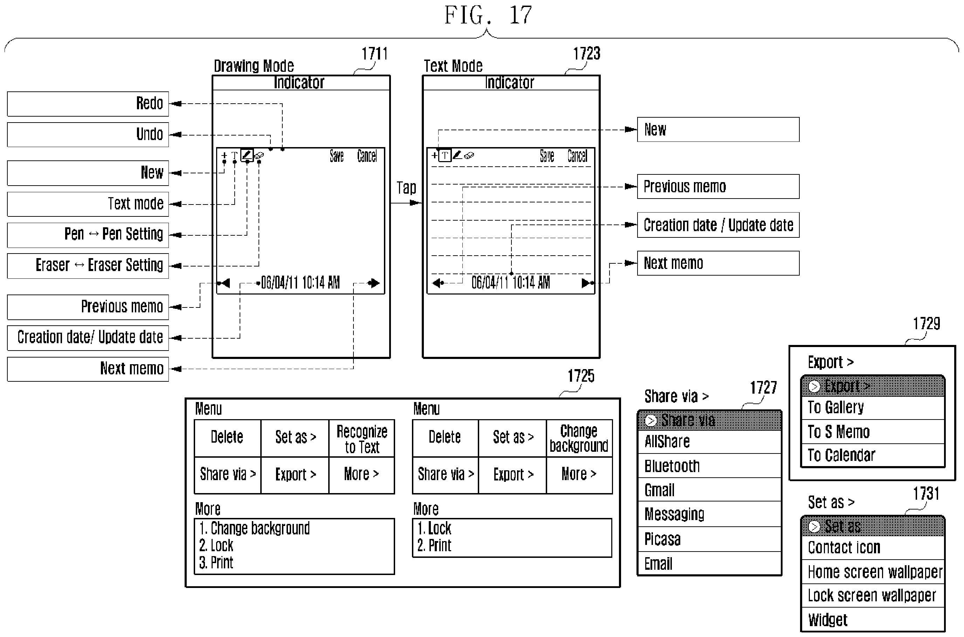

FIG. 17 illustrates an exemplary embodiment of a pad for generating a quick memo in a quick memo list of FIG. 16. Referring to FIG. 17, in a quick memo application, the user can write a quick memo using a drawing pad 1711 or a text pad 1723. Further, the user can call a menu through use of the pen 10, and the menu can be any of the menus 1725, 1727, 1729, 1731 providing various menu selections, functions, and settings.

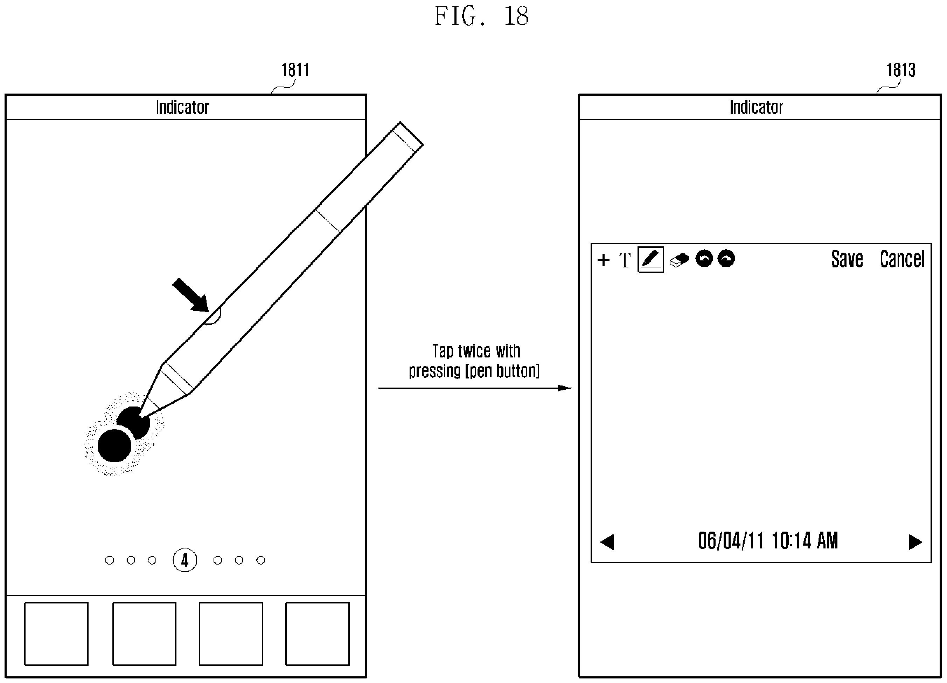

Further, the quick memo application can be selected when performing a rich memo application, and a quick memo can be selected through the second input. That is, as described herein with reference to FIGS. 2 and 3A, the user can set an application which can perform as a shortcut function in the setting process. At this time, in case the quick memo is set by the shortcut application, the quick memo application can be selected as shown in FIG. 18. FIG. 18 illustrates a method for selecting a quick memo application according to the exemplary embodiment of the present invention. Referring to FIG. 18, in case the quick memo is set by a shortcut application, if a second input for selecting a quick memo, which set as a shortcut function, is determined in the state in which an arbitrary application is being executed using the screen 1811 (a double click in the state where the button 11 of the pen 10 is clicked on), the controller 110 displays a drawing pad 1813 for executing the quick memo application. Further, if the user writes a quick memo (drawing and/or handwriting) on the drawing pad 1813, the controller 110 displays the written quick memo in the drawing pad 1813. Further, the written quick memo is registered in the quick memo thumbnail list 1611 of FIG. 16.

The above-described apparatus and methods according to the present invention can be implemented in hardware, firmware or as software or computer code that can be stored in a recording medium such as a CD ROM, a RAM, a ROM, a floppy disk, DVDs, a hard disk, a magnetic storage media, an optical recording media, or a magnetooptical disk or computer code downloaded over a network originally stored on a remote recording medium, a computer readable recording medium, or a non-transitory machine readable medium and to be stored on a local recording medium, so that the methods described herein can be rendered in such software that is stored on the recording medium using a general purpose computer, a digital computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

## Claims

1. A portable apparatus comprising a portable terminal (100) and a pen (10), the portable terminal (100) comprising a controller (110), a touch panel (120), and a display unit (130):
wherein the pen (10) includes a button (11) and the pen (10) is arranged to be set to a first input state in which the pen tip (12) carries a first level of electrical charge or to a second input state in which the pen tip (12) carries a second level of electrical charge depending on whether or not the button (11) has been pressed;
wherein the touch panel (120) includes a touch sensor arranged to distinguish between the first and second levels of electrical charge in response to being touched by the pen (10) or the pen (10) approaching the touch panel and according to the level of electrical charge carried by the pen tip (12), the touch panel (120) being arranged to generate a first input signal or a second input signal depending upon the distinguished level of electrical charge,
wherein the controller (110) is arranged to analyse (417, 421) the first or second input signal, to determine a first input or second input depending upon the first or second input signal, to perform a pre-set function (419) corresponding to the first input in an executed application, and to call (423) a pre-set application or perform a pre-set command corresponding to the second input;
wherein the display unit (130) is arranged to display a screen processed according to at least one of the first input and the second input under the control of the controller;
wherein the first input includes at least one of a general input that controls operation of the executed application, a handwritten letter and a drawing, and the second input is a command that calls a predetermined application and/or a command for execution of a predetermined operation;
wherein in response to determining a general input, the controller (110) is arranged to perform different functions according to an input type of the general input; and
wherein in response to determining a second input, the controller (110) is arranged to perform different commands according to an input type of the second input.

2. The portable apparatus of claim 1, wherein in response to determining a first input the controller (110) is further arranged to operate a drawing function to cause the display unit (130) to display a handwriting pad when executing a document writing application, and to display a handwritten letter inputted in the handwriting pad, and recognize and process the handwritten letter.

3. The portable apparatus of claim 1 or claim 2, wherein in response to determining a first input the controller (110) is further arranged to operate a drawing function to cause the display unit (130) to display a drawing pad when selecting a drawing application, and to display the drawing of the first input in the drawing pad, to include the drawing image in the currently executed application, and process the drawing image when the drawing function is terminated.

4. The portable apparatus of claim 3, wherein in response to determining a first input the controller (110) is further arranged to display a drawing in the current screen in response to the first input when the drawing occurs in an application which displays an image on the display unit (130), and when the drawing function is terminated the controller (110) is further arranged to cause the display unit (130) to display an image including the drawing in the screen image.

5. The portable apparatus of any one of the preceding claims, wherein the controller (110) is further arranged to analyse an input type in response to determining a second input, if the input type is an application call, to call and display an application corresponding to the application call, which is set for the corresponding second input, is called and displayed, and if the input type is a command, to perform the command, which is set for the corresponding second input.

6. An input method of a portable apparatus comprising a portable terminal and a pen (10), the portable terminal comprising a touch panel (120), the input method comprising:
generating by the pen (10) a first level of electrical charge in the pen tip (12) in a first input state and a second level of electrical charge in the pen tip (12) in a second input state depending on whether or not a button (11) of the pen (10) has been pressed;
generating by the touch panel (120) a first input signal or a second input signal according to a sensed change in the level of electrical charge in response to the touch panel being touched by the pen (10) or the pen (10) approaching the touch panel and according to the level of electrical charge carried by the pen tip (12);
analysing (317, 421) the first or second input signal to determine a first input or a second input depending upon the first or second input signal;
performing a pre-set function (419) corresponding to the first input in an application being executed;
calling (423) a pre-set application or performing a pre-set command corresponding to the second input; and
displaying, on a display unit (130), a screen processed according to at least one of the first input and the second input;
wherein the first input includes at least one of a general input that controls operation of the executed application, a handwritten letter and a drawing, and the second input is a command that calls a predetermined application and/or a command for execution of a predetermined operation;
wherein in response to determining a general input, the method further comprises performing different functions according to an input type of the general input; and
wherein in response to determining a second input, the method further comprises performing different commands according to an input type of the second input.

7. The input method of claim 6, wherein performing a pre-set function corresponding to the first input comprises:
displaying, on the display unit (130), a handwriting pad when executing a document writing application;
displaying, on the display unit (130), a handwritten letter inputted in the handwriting pad; and
recognizing and processing the handwritten letter.

8. The input method of claim 7, wherein recognizing the handwritten letter further comprises:
correcting the letter using a corresponding function if a first input for correcting a handwritten letter is generated.

9. The input method of claim 7 or claim 8, wherein the document writing mode is at least one of a text message, e-mail or messenger application.

10. The input method of any one of claims 6 to 9, wherein performing of a pre-set function corresponding to the first input further comprises:
performing a drawing function;
displaying, on the display unit (130), a drawing pad when selecting a drawing mode application;
displaying, on the display unit (130), the drawing of the first input in the drawing pad; and
including the drawing image in the currently executed application and processing the drawing image when the drawing function is terminated.

11. The input method of claim 10, wherein the application being executed is a letter writing application, and the generated drawing image is included in the written text message.

12. The input method of claim 10 or claim 11, wherein performing the pre-set function corresponding to the first input further comprises:
displaying the drawing of the first input inputted in the current screen image when the drawing occurs in the application which displays an image; and
generating an image including the drawing in the screen image when the drawing function is terminated.

13. The input method of any one of claims 6 to 12, wherein a general input of the first input includes at least one of a tap, a long press, a horizontal flick and a vertical flick, and when the general input occurs, the application being executed performs a function corresponding to the general input.

14. The input method of any one of claims 6 to 13, calling the pre-set application or performing a pre-set command corresponding to the second input comprises:
analysing an input type of the second input;
calling and displaying the pre-set application which is set for the second input if the input is an application call for the pre-set application; and
performing the pre-set command which is set for the corresponding second input if the input is the pre-set command.

15. The input method of claim 14, wherein a second input for the application call includes at least one of a double click and a long press, and a second input for command execution is a flick.

## Patentansprüche

1. Tragbare Vorrichtung, aufweisend ein tragbares Endgerät (100) und einen Stift (10), wobei das tragbare Endgerät (100) einen Controller (110), ein Berührungsfeld (120) und eine Anzeigeeinheit (130) aufweist:
wobei der Stift (10) eine Taste (11) aufweist, und der Stift (10) angeordnet ist, um in einen ersten Eingabezustand, in dem die Stiftspitze (12) eine elektrische Ladung eines ersten Pegels transportiert oder in einen zweiten Eingabezustand, in dem die Stiftspitze (12) eine elektrische Ladung eines zweiten Pegels transportiert, gesetzt zu werden, abhängig davon, ob die Taste (11) gedrückt worden ist;
wobei das Berührungsfeld (120) einen Berührungssensor enthält, der angeordnet ist, um zwischen den ersten und zweiten Pegeln von elektrischer Ladung zu unterscheiden in Reaktion darauf, durch den Stift (10) berührt zu werden oder dass der Stift (10) sich dem Berührungsfeld nähert, und gemäß dem Pegel von elektrischer Ladung, die durch die Stiftspitze (12) transportiert wird,
wobei das Berührungsfeld (120) angeordnet ist, um ein erstes Eingabesignal oder ein zweites Eingabesignal abhängig von dem unterschiedenen Pegel von elektrischer Ladung zu generieren,
wobei der Controller (110) angeordnet ist, um das erste oder zweite Eingabesignal zu analysieren (417, 421), um eine erste Eingabe oder zweite Eingabe abhängig von dem ersten oder zweiten Eingabesignal zu bestimmen, um eine voreingestellte Funktion (419) auszuführen, die der ersten Eingabe in einer ausgeführten Anwendung entspricht, und eine voreingestellte Anwendung aufzurufen (423) oder einen voreingestellten Befehl auszuführen, der der zweiten Eingabe entspricht;
wobei die Anzeigeeinheit (130) angeordnet ist, um einen Bildschirm anzuzeigen, der gemäß entweder der ersten Eingabe oder der zweiten Eingabe unter der Steuerung des Controllers verarbeitet wird;
wobei die erste Eingabe mindestens eine allgemeine Eingabe enthält, die eine Operation der ausgeführten Anwendung, einen handgeschriebenen Buchstaben oder eine Zeichnung steuert, und die zweite Eingabe ein Befehl ist, der eine vorbestimmte Anwendung und/oder einen Befehl zur Ausführung einer vorbestimmten Operation aufruft;
wobei in Reaktion auf ein Bestimmen einer allgemeinen Eingabe der Controller (110) angeordnet ist, um verschiedene Funktionen gemäß einem Eingabetyp der allgemeinen Eingabe auszuführen; und
wobei in Reaktion auf ein Bestimmen einer zweiten Eingabe der Controller (110) angeordnet ist, um verschiedene Befehle gemäß einem Eingabetyp der zweiten Eingabe auszuführen.

2. Tragbare Vorrichtung nach Anspruch 1, wobei in Reaktion auf ein Bestimmen einer ersten Eingabe der Controller (110) ferner angeordnet ist, um eine Zeichenfunktion zu bedienen, um die Anzeigeeinheit (130) zu veranlassen, ein Handschrift-Pad anzuzeigen, wenn eine Dokument-Schreibanwendung ausgeführt wird, und um einen in das Handschrift-Pad in Handschrift eingegebenen Buchstaben anzuzeigen und den handschriftlichen Buchstaben zu verarbeiten.

3. Tragbare Vorrichtung nach Anspruch 1 oder Anspruch 2, wobei in Reaktion auf ein Bestimmen einer ersten Eingabe der Controller (110) ferner angeordnet ist, um eine Zeichenfunktion zu bedienen, um die Anzeigeeinheit (130) zu veranlassen, ein Zeichnungs-Pad anzuzeigen, wenn eine Zeichenanwendung ausgewählt wird, und um die Zeichnung der ersten Eingabe in dem Zeichnungs-Pad anzuzeigen, um das Zeichnungsbild in die aktuell ausgeführte Anwendung aufzunehmen und das Zeichnungsbild zu verarbeiten, wenn die Zeichenfunktion beendet ist.

4. Tragbare Vorrichtung nach Anspruch 3, wobei in Reaktion auf ein Bestimmen einer ersten Eingabe der Controller (110) ferner angeordnet ist, um eine Zeichnung in dem aktuellen Bildschirm in Reaktion auf die erste Eingabe anzuzeigen, wenn die Zeichnung in einer Anwendung auftritt, die ein Bild auf der Anzeigeeinheit (130) anzeigt, und wenn die Zeichenfunktion beendet ist, der Controller (110) ferner angeordnet ist, um die Anzeigeeinheit (130) zu veranlassen, ein Bild mit der Zeichnung in dem Bildschirmbild anzuzeigen.

5. Tragbare Einheit nach einem der vorhergehenden Ansprüche, wobei der Controller (110) ferner angeordnet ist, um einen Eingabetyp in Reaktion auf ein Bestimmen einer zweiten Eingabe zu analysieren, wenn der Eingabetyp ein Anwendungsaufruf ist, um eine Anwendung, die dem Anwendungsaufruf entspricht, der für die entsprechenden zweite Eingabe eingerichtet ist, aufzurufen und anzuzeigen, und wenn der Eingabetyp ein Befehl ist, den Befehl auszuführen, der für die entsprechende zweite Eingabe eingerichtet ist.

6. Eingabeverfahren einer tragbaren Vorrichtung, aufweisend ein tragbares Endgerät und einen Stift (10), wobei das tragbare Endgerät ein Berührungsfeld (120) aufweist, wobei das Eingabeverfahren aufweist:
durch den Stift (10) ein Generieren eines ersten Pegels einer elektrischen Ladung in der Stiftspitze (12) in einem ersten Eingabezustand und eines zweiten Pegels einer elektrischen Ladung in der Stiftspitze (12) in einem zweiten Eingabezustand, abhängig davon, ob eine Taste (11) des Stifts (10) gedrückt worden ist;
durch das Berührungsfeld (120) ein Generieren eines ersten Eingabesignals oder eines zweiten Eingabesignals gemäß einer erfassten Änderung in dem Pegel von elektrischer Ladung in Reaktion darauf, dass das Berührungsfeld durch den Stift (10) berührt wird, oder dass der Stift (10) sich dem Berührungsfeld nähert, und gemäß dem Pegel von elektrischer Ladung, die durch die Stiftspitze (12) transportiert wird;
ein Analysieren (317, 421) des ersten oder zweiten Eingabesignals, um eine erste Eingabe oder eine zweite Eingabe abhängig von dem ersten oder zweiten Eingabesignal zu bestimmen;
ein Ausführen einer voreingestellten Funktion (419), die der ersten Eingabe in einer Anwendung entspricht, die ausgeführt wird;
ein Aufrufen (423) einer voreingestellten Anwendung oder ein Ausführen eines voreingestellten Befehle, die der zweiten Eingabe entsprechen; und
auf einer Anzeigeeinheit (130) ein Anzeigen eines Bildschirms, der gemäß entweder der ersten Eingabe oder der zweiten Eingabe verarbeitet wird;
wobei die erste Eingabe mindestens eine allgemeine Eingabe enthält, die eine Operation der ausgeführten Anwendung, einen handgeschriebenen Buchstaben oder eine Zeichnung steuert, und die zweite Eingabe ein Befehl ist, der eine vorbestimmte Anwendung und/oder einen Befehl zur Ausführung einer vorbestimmten Operation aufruft;
wobei in Reaktion auf ein Bestimmen einer allgemeinen Eingabe das Verfahren ferner ein Ausführen von verschiedenen Funktionen gemäß einem Eingabetyp der allgemeinen Eingabe aufweist; und
wobei in Reaktion auf ein Bestimmen einer zweiten Eingabe das Verfahren ferner ein Ausführen von verschiedenen Befehlen gemäß einem Eingabetyp der zweiten Eingabe aufweist.

7. Eingabeverfahren nach Anspruch 6, wobei ein Ausführen einer voreingestellten Funktion, die der ersten Eingabe entspricht, aufweist:
auf der Anzeigeeinheit (130) ein Anzeigen eines Handschrift-Pads beim Ausführen einer Dokument-Schreibanwendung;
auf der Anzeigeeinheit (130) ein Anzeigen eines handschriftlichen Buchstabens, der in das Handschrift-Pad eingegeben wurde; und
ein Erkennen und Verarbeiten des handschriftlichen Buchstabens.

8. Eingabeverfahren nach Anspruch 7, wobei ein Erkennen des handschriftlichen Buchstabens ferner aufweist:
ein Korrigieren des Buchstabens unter Verwendung einer entsprechenden Funktion, wenn eine erste Eingabe zum Korrigieren eines handschriftlichen Buchstabens generiert wird.

9. Eingabeverfahren nach Anspruch 7 oder Anspruch 8, wobei der Dokument-Schreibmodus mindestens eine Textnachricht, eine E-Mail- oder Messenger-Anwendung ist.

10. Eingabeverfahren nach einem der Ansprüche 6 bis 9, wobei ein Ausführen einer voreingestellten Funktion, die der ersten Eingabe entspricht, ferner aufweist:
ein Ausführen einer Zeichenfunktion;
auf der Anzeigeeinheit (130) ein Anzeigen eines Zeichnungs-Pads beim Auswählen einer Zeichnungsmodusanwendung;
auf der Anzeigeeinheit (130) ein Anzeigen der Zeichnung der ersten Eingabe in das Zeichnungs-Pad; und
ein Aufnehmen des Zeichnungsbilds in die aktuell ausgeführte Anwendung und ein Verarbeiten des Zeichnungsbilds, wenn die Zeichenfunktion beendet ist.

11. Eingabeverfahren nach Anspruch 10, wobei die ausgeführte Anwendung eine Buchstaben-Schreibanwendung ist, und das generierte Zeichnungsbild in die geschriebene Textnachricht aufgenommen wird.

12. Eingabeverfahren nach Anspruch 10 oder Anspruch 11, wobei ein Ausführen der voreingestellten Funktion, die der ersten Eingabe entspricht, ferner aufweist:
ein Anzeigen der Zeichnung der ersten Eingabe, die in das aktuelle Bildschirmbild eingegeben wurde, wenn die Zeichnung in der Anwendung auftritt, die ein Bild anzeigt; und
ein Generieren eines Bilds mit der Zeichnung in dem Bildschirmbild, wenn die Zeichenfunktion beendet ist.

13. Eingabeverfahren nach einem der Ansprüche 6 bis 12, wobei eine allgemeine Eingabe der ersten Eingabe mindestens ein Antippen, ein langes Drücken, eine horizontale Fingerbewegung oder eine vertikale Fingerbewegung enthält, und wenn die allgemeine Eingabe auftritt, die ausgeführte Anwendung eine Funktion ausführt, die der allgemeinen Eingabe entspricht.

14. Eingabeverfahren nach einem der Ansprüche 6 bis 13, wobei ein Aufrufen der voreingestellten Anwendung oder ein Ausführen eines voreingestellten Befehls, die der zweiten Eingabe entsprechen, ferner aufweisen:
ein Analysieren eines Eingabetyps der zweiten Eingabe;
ein Aufrufen und Anzeigen der voreingestellten Anwendung, die für die zweite Eingabe eingerichtet ist, wenn die Eingabe ein Anwendungsaufruf der voreingestellten Anwendung ist, und ein Ausführen des voreingestellten Befehls, der für die entsprechende zweite Eingabe eingerichtet ist, wenn die Eingabe der voreingestellte Befehls ist.

15. Eingabeverfahren nach Anspruch 14, wobei eine zweite Eingabe für den Anwendungsaufruf mindestens einen Doppelklick oder ein langes Drücken enthält, und die zweite Eingabe für eine Befehlsausführung eine Fingerbewegung ist.

## Revendications

1. Appareil portable comprenant un terminal portable (100) et un stylo (10), le terminal portable (100) comprenant un contrôleur (110), un panneau tactile (120) et un dispositif d'affichage (130) :
le stylo (10) comprenant un bouton (11), et le stylo (10) étant agencé pour être réglé sur un premier état d'entrée dans lequel la pointe du stylo (12) transporte un premier niveau de charge électrique ou sur un deuxième état d'entrée dans lequel la pointe du stylo (12) transporte un deuxième niveau de charge électrique, selon que l'on ait appuyé, ou non, sur le bouton (11) ;
le panneau tactile (120) comprenant un capteur tactile agencé pour faire la distinction entre les premier et deuxième niveaux de charge électrique en réponse au fait qu'il a été touché par le stylo (10) ou que l'on ait approché le stylo (10) du panneau tactile, et en fonction du niveau de charge électrique transporté par la pointe du stylo (12),
le panneau tactile (120) étant agencé pour générer un premier signal d'entrée ou un deuxième signal d'entrée en fonction du niveau de charge électrique que l'on a distingué,
le contrôleur (110) étant agencé pour analyser (417, 421) le premier ou le deuxième signal d'entrée, pour déterminer une première entrée ou une deuxième entrée en fonction du premier ou du deuxième signal d'entrée, pour effectuer une fonction préétablie (419) correspondant à la première entrée dans une application exécutée, et pour appeler (423) une application préétablie ou exécuter une commande préétablie correspondant à la deuxième entrée ;
le dispositif d'affichage (130) étant agencé pour afficher un écran traité selon au moins un de la première entrée et de la deuxième entrée sous le contrôle du contrôleur ;
la première entrée comprenant au moins une des suivantes : une entrée générale commandant l'utilisation de l'application exécutée, une lettre écrite à la main et un dessin, et la deuxième entrée étant une commande appelant une application prédéterminée et/ou une commande pour l'exécution d'une opération prédéterminée ;
en réponse à la détermination d'une entrée générale, le contrôleur (110) étant agencé pour exécuter différentes fonctions selon un type d'entrée de l'entrée générale ; et
en réponse à la détermination d'une deuxième entrée, le contrôleur (110) étant agencé pour exécuter différentes commandes en fonction d'un type d'entrée de la deuxième entrée.

2. Appareil portable selon la revendication 1, dans lequel, en réponse à la détermination d'une première entrée, le contrôleur (110) est agencé en outre pour exécuter une fonction de dessin afin que le dispositif d'affichage (130) affiche une tablette tactile lors de l'exécution d'une application d'écriture de document, et pour afficher une lettre écrite à la main entrée dans la tablette tactile, et reconnaître et traiter la lettre écrite à la main.

3. Appareil portable selon la revendication 1 ou la revendication 2, dans lequel, en réponse à la détermination d'une première entrée, le contrôleur (110) est agencé en outre pour exécuter une fonction de dessin afin que le dispositif d'affichage (130) affiche un carton à dessin lors de la sélection d'une application de dessin, et pour afficher le dessin de la première entrée dans le carton à dessin, pour incorporer l'image du dessin dans l'application en cours d'exécution, et pour traiter l'image du dessin lorsque l'exécution de la fonction de dessin est terminée.

4. Appareil portable selon la revendication 3, dans lequel, en réponse à la détermination d'une première entrée, le contrôleur (110) est agencé en outre afin d'afficher un dessin dans l'écran actuel en réponse à la première entrée lorsque le dessin survient dans une application qui affiche une image sur le dispositif d'affichage (130), et lorsque la fonction de dessin est terminée, le contrôleur (110) étant agencé en outre pour donner lieu à l'affichage, par le dispositif d'affichage (130), d'une image comprenant le dessin dans l'image de l'écran.

5. Appareil portable selon une quelconque des revendications précédentes, le contrôleur (110) étant agencé en outre pour analyser un type d'entrée en réponse à la détermination d'une deuxième entrée, si le type d'entrée est un appel d'application, pour appeler et afficher une application correspondant à l'appel d'application, qui est établi pour la deuxième entrée correspondante, est appelé et affiché, et si le type d'entrée est une commande, pour exécuter la commande, qui est établie pour la deuxième entrée correspondante.

6. Méthode d'entrée d'un appareil portable comprenant un terminal portable et un stylo (10), le terminal portable comprenant un panneau tactile (120), la méthode d'entrée comprenant :
la génération par le stylo (10) d'un premier niveau de charge électrique dans la pointe du stylo (12) dans un premier état d'entrée, et d'un deuxième niveau de charge électrique dans la pointe du stylo (12) dans un deuxième état d'entrée selon que l'on ait appuyé, ou non, sur le bouton (11) du stylo (10) ;
la génération par le panneau tactile (120) d'un premier signal d'entrée ou d'un deuxième signal d'entrée en fonction d'une variation détectée dans le niveau de charge électrique en réponse au fait que l'on a touché le panneau tactile avec le stylo (10) ou que l'on en a approché le stylo (10) du panneau tactile, et en fonction du niveau de charge électrique transporté par la pointe du stylo (12) ;
l'analyse (317, 421) du premier ou du deuxième signal d'entrée pour déterminer une première entrée ou une deuxième entrée en fonction du premier ou du deuxième signal d'entrée ;
l'exécution d'une fonction préétablie (419) correspondant à la première entrée dans une application en cours d'exécution ;
l'appel (423) d'une application préétablie ou l'exécution d'une commande préétablie correspondant à la deuxième entrée ; et
l'affichage, sur un dispositif d'affichage (130), d'un écran traité selon au moins un de la première entrée et de la deuxième entrée ;
la première entrée comprenant au moins une des suivantes : une entrée générale commandant l'utilisation de l'application exécutée, une lettre écrite à la main et un dessin, et la deuxième entrée étant une commande appelant une application prédéterminée et/ou une commande pour l'exécution d'une opération prédéterminée
en réponse à la détermination d'une entrée générale, la méthode comprenant en outre l'exécution de différentes fonctions selon un type d'entrée de l'entrée générale ; et
en réponse à la détermination d'une deuxième entrée, la méthode comprenant en outre l'exécution de différentes commandes en fonction d'un type d'entrée de la deuxième entrée.

7. Méthode d'entrée selon la revendication 6, l'exécution d'une fonction préétablie correspondant à la première entrée comprenant :
l'affichage, sur le dispositif d'affichage (130), d'une tablette tactile lors de l'exécution d'une application d'écriture de document ;
l'affichage, sur le dispositif d'affichage (130), d'une lettre manuscrite entrée dans la tablette tactile ; et
la reconnaissance et le traitement de la lettre écrite à la main.

8. Méthode d'entrée selon la revendication 7, la reconnaissance de la lettre écrite à la main comprenant en outre :
la correction de la lettre en utilisant une fonction correspondante si une première entrée pour la correction d'une lettre écrite à la main est générée.

9. Méthode d'entrée selon la revendication 7 ou la revendication 8, le mode d'écriture de document étant au moins un des suivants : un message texte, un e-mail, ou une application de messagerie.

10. Méthode d'entrée selon une quelconque des revendications 6 à 9, l'exécution d'une fonction préétablie correspondant à la première entrée comprenant en outre :
l'exécution d'une fonction de dessin ;
l'affichage, sur le dispositif d'affichage (130), d'un carton à dessin lors de la sélection d'une application de mode de dessin ;
l'affichage, sur le dispositif d'affichage (130), du dessin de la première entrée dans le carton à dessin ; et
l'incorporation de l'image du dessin dans l'application en cours d'exécution, et le traitement de l'image du dessin lorsque l'exécution de la fonction de dessin est terminée.

11. Méthode d'entrée selon la revendication 10, l'application en cours d'exécution étant une application d'écriture de lettre, et l'image de dessin générée étant incorporée dans le message texte écrit.

12. Méthode selon la revendication 10 ou la revendication 11, l'exécution de la fonction préétablie correspondant à la première entrée comprenant en outre :
l'affichage du dessin de la première entrée qui a été entrée dans l'image d'écran actuelle lorsque le dessin se produit dans l'application affichant une image ; et
la génération d'une image incorporant le dessin dans l'image à l'écran lorsque la fonction de dessin est terminée.

13. Méthode d'entrée selon une quelconque des revendications 6 à 12, une entrée générale de la première entrée comprenant au moins une des suivantes : une tape, une pression longue, un balayage rapide horizontal et un balayage rapide vertical, et lorsque survient l'entrée générale, l'application en cours d'exécution exécutant une fonction correspondant à l'entrée générale.

14. Méthode d'entrée selon une quelconque des revendications 6 à 13, l'appel de l'application préétablie ou l'exécution d'une commande préétablie correspondant à la deuxième entrée comprenant :
l'analyse d'un type d'entrée de la deuxième entrée ;
l'appel et l'affichage de l'application préétablie, qui est réglée pour la deuxième entrée si l'entrée est un appel d'application pour l'application préétablie ; et
l'exécution de la commande préétablie, qui est établie pour la deuxième entrée correspondante si l'entrée est la commande préétablie.

15. Méthode d'entrée selon la revendication 14, une deuxième entrée pour l'appel d'application comprenant au moins un double clic et une pression longue, et une deuxième entrée pour l'exécution d'une commande étant un balayage rapide.
